# EUROPÄISCHE PATENTSCHRIFT

(11) **EP 1 425 288 B1**
(45) Veröffentlichungstag und Bekanntmachung des Hinweises auf die Patenterteilung: **02.03.2005**
(21) Anmeldenummer: 02777051.0
(22) Anmeldetag: 10.09.2002
(51) Int. Cl.: C07F 11/00

(54) **MONOCYCLOPENTADIENYLKOMPLEXE MIT EINEM KONDENSIERTEN HETEROCYCLUS**
MONOCYCLOPENTADIENYL COMPLEXES COMPRISING A CONDENSED HETEROCYCLE
COMPLEXES MONOCYCLOPENTADIENYLE COMPORTANT UN HETEROCYCLE CONDENSE

(30) Priorität: 14.09.2001 DE 10145453
(43) Veröffentlichungstag der Anmeldung: 09.06.2004
(73) Patentinhaber: Basell Polyolefine GmbH, 50389 Wesseling (DE)
(72) Erfinder: MIHAN, Shahram, 67061 Ludwigshafen (DE); NIFANT'EV, Ilya, Moscow, 117526 (RU)
(74) Vertreter: Seelert, Stefan, Dr.
(86) Internationale Anmeldenummer: PCT/EP2002/010117
(87) Internationale Veröffentlichungsnummer: WO 2003/024982

(56) Entgegenhaltungen:
- WO-A-01/12641
- WO-A-01/44318
- WO-A-01/47939
- WO-A-01/53360
- WO-A-02/31001
- WO-A-98/22468
- WO-A-98/37106
- WO-A-99/24446
- DE-A- 19 710 615
- DOEHRING ET AL: "Donor-Ligand-Substituted Cyclopentadienylchromium(III) Complexes: A New Class of Alkene Polymerization Catalyst. 1. Amino-Substituted Systems" ORGANOMETALLICS, WASHINGTON, DC, US, Bd. 19, Nr. 4, 2000, Seiten 388-402, XP002150580 ISSN: 0276-7333
- RUBLE J C ET AL: "CHIRAL PI-COMPLEXES OF HETEROCYCLES WITH TRANSITION METALS: A VERSATILE NEW FAMILY OF NUCLEOPHILIC CATALYSTS" JOURNAL OF ORGANIC CHEMISTRY, AMERICAN CHEMICAL SOCIETY. EASTON, US, Bd. 61, 1996, Seiten 7230-7231, XP000985932 ISSN: 0022-3263 in der Anmeldung erwähnt

## Beschreibung

Die vorliegende Erfindung betrifft Monocyclopentadienylkomplexe, wobei das Cyclopentadienyl-System mindestens einem kondensierten Heterocyclus und mindestens einen neutralen Donor enthält und ein Katalysatorsystem enthaltend mindestens einen der Monocyclopentadienylkomplexe.

Außerdem betrifft die Erfindung die Verwendung des Katalysatorsystems zur Polymerisation oder Copolymerisation von Olefinen und ein Verfahren zur Herstellung von Polyolefinen durch Polymerisation oder Copolymerisation von Olefinen in Gegenwart des Katalysatorsystems und damit erhältliche Polymere.

Organoübergangsmetallverbindungen wie Metallocenkomplexe sind als Katalysatoren für die Olefinpolymerisation von großem Interesse, weil sich mit ihnen Polyolefine synthetisieren lassen, die mit herkömmlichen Ziegler-Natta-Katalysatoren nicht zugänglich sind. Beispielsweise führen solche Single-Site-Katalysatoren zu Polymeren mit einer engen Molmassenverteilung und einem einheitlichen Comonomereinbau. Ausser Bis(cyclopentadienyl)verbindungen werden auch sogenannte "constrained geometry" Katalysatoren eingesetzt. Dies sind zumeist Titankomptexe in der Oxidationsstufe 4 mit nur einem Cyclopentadienylsystem, wobei dieses Ober eine Brücke mit einem anionischen Amid verbunden ist, das ebenfalls an das Titanzentrum gebunden ist.

In der WO 98/22486 sind Bis(cyclopentadienyl)komplexe beschrieben, in denen eines oder beide der Cyclopentadienylsysteme ein oder mehrere ankondensierte Heterocyclen enthält.

Die WO98/37106 offenbart Katalysatorsysteme enthaltend Übergangsmetallkomplexe mit mindestens einem Cyclopentadienylliganden mit ankondensiertem Heterocyclus und einem weiteren Cyclopentadienyl Liganden oder anionischem Donor.

Fu et al. in J. Org. Chem. 1996, 61, 7230-7231 beschreiben Ferrocenkomplexe, worin einer der Cyclopentadienylringe einen ankondensierten Pyridinring enthält.

Der Erfindung lag die Aufgabe zugrunde weitere Übergangsmetallkomplexe auf der Basis von Cyclopentadienylliganden mit ankondensiertem Heterocyclus zu finden, die für die Polymerisation von Olefinen geeignet sind.

Demgemäß wurde ein Monocyclopentadienylkomplex gefunden, welcher folgendes Strukturmerkmal der allgemeinen Formel (HCp)YₙM enthält, worin die Variablen folgende Bedeutung haben:
- HCp: ein Cyclopentadienyl-System mit mindestens einem kondensierten Heterocyclus
- Y: ein an HCp gebundener Substituent, enthaltend mindestens einen neutralen Donor, welcher ein Atom der Gruppen 15 oder 16 des Periodensystems enthält, wobei Y ein Substituent der allgemeinen Formel -Zₘ-A ist, worin die Variablen folgende Bedeutung haben:
Z eine divalente Brücke zwischen A und HCp
A NR⁴R⁵, PR⁴R⁵, OR⁴, SR⁴ oder ein unsubstituiertes, substituiertes oder kondensiertes, heteroaromatisches Ringsystem,
R⁴-R⁵ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR⁶₃, wobei die organischen Reste R⁴-R⁵ auch durch Halogene substituiert sein können und je zwei Reste R⁴-R⁵ auch zu einem fünf- oder sechsgliedrigen Ring verbunden sein können,
R⁶ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei Reste R⁶ auch zu einem fünf- oder sechsgliedrigen Ring verbunden sein können und
m 1 ist, oder wenn A ein unsubstituiertes, substituiertes oder kondensiertes, heterocyclisches Ringsystem ist, auch 0 sein kann,
- M: ein Metall der Gruppen 3, 4, 5, oder 6 des Periodensystems
- n: 1, 2 oder 3

Weiterhin wurden ein Katalysatorsystem enthaltend die erfindungsgemässen Monocyclopentadienylkomplexe, die Verwendung des Katalysatorsystems zur Polymerisation oder Copolymerisation von Olefinen und ein Verfahren zur Herstellung von Polyolefinen durch Polymerisation oder Copolymerisation von Olefinen in Gegenwart des Katalysatorsystems und daraus erhältliche Polymere gefunden.

Die erfindungsgemässen Monocyclopentadienylkomplexe enthalten als Strukturelement (HCp)YnM, wobei die Variablen die obige Bedeutung besitzen. An das Metallatom M können daher durchaus noch weitere Liganden gebunden sein. Die Anzahl weiterer Liganden hängt beispielsweise von der Oxidationsstufe des Metallatoms ab. Als Liganden kommen nicht weitere Cyclopentadienyl-Systeme in Frage. Geeignet sind mono- und dianionische Liganden wie sie beispielsweise für X beschrieben sind. Zusätzlich können auch noch Lewisbasen wie beispielsweise Amine, Ether, Ketone, Aldehyde, Ester, Sulfide oder Phosphine an das Metallzentrum M gebunden sein.

HCp ist ein Cyclopentadienyl-System mit mindestens einem kondensierten Heterocyclus. Als Cyclopentadienyl gilt im folgenden ein C₅-Ringsystem mit 6 π-Elektronen, wobei eines der Kohlenstoffatome auch durch Stickstoff oder Phosphor, bevorzugt Phosphor ersetzt sein kann. Bevorzugt sind eine C₅-Ringsystem ohne Ersatz durch ein Heteroatom verwendet. An dieses Cyclopentadienyl-Grundgerüst ist mindestens ein Heterocyclus ankondesiert, welcher mindestens ein Atom der Gruppe 15 oder 16 des Periodensystems enthält. Ankondensiert bedeutet hierin, dass der Heterocyclus und das Cyclopentadienylgerüst zwei Atome, bevorzugt Kohlenstoffatome gemeinsam haben. Bevorzugt sind Cyclopentadienylsysteme HCp der Formel (F-I) 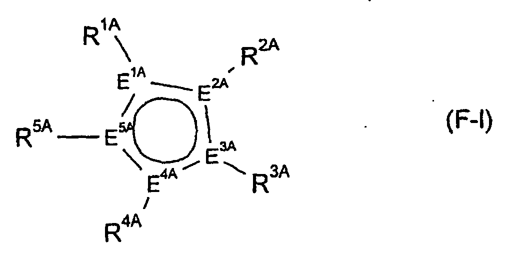 worin die Variablen folgende Bedeutung besitzen:
- E^{1A}-E^{5A}: Kohlenstoff oder maximal ein E^{1A} bis E^{5A} Phosphor oder Stickstoff, bevorzugt Phosphor
- R^{1A}-R^{5A}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR^{6A}₃, wobei die organischen Reste R^{1A}-R^{5A} auch durch Halogene substituiert sein können und je zwei vicinale Reste R^{1A}-R^{5A} auch zu einem fünf- oder sechsgliedrigen Ring verbunden sein können, mit der Bedingung, dass mindestens zwei vicinale Reste R^{1A}-R^{5A} zu einem Heterocyclus verbunden sind, welcher mindestens ein Atom aus den Gruppen 15 oder 16 des Periodensystems enthält und ein R^{1A}-R^{5A} gleich Y sein kann und
- R^{6A}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei geminale Reste R^{6A} auch zu einem fünf- oder sechsgliedrigen Ring verbunden sein können.

In bevorzugten Cyclopentadienylsystemen HCp sind alle E^{1A} bis E^{5A} Kohlenstoff.

Mindestens zwei vicinale Reste R^{1A}-R^{5A} bilden einen Heterocyclus, welcher mindestens ein Atom aus den Gruppen 15 oder 16 des Periodensystems, bevorzugt Stickstoff, Phosphor, Sauerstoff und/oder Schwefel, besonders bevorzugt Stickstoff und/oder Schwefel enthält. Bevorzugt sind Heterocyclen mit einer Ringgrösse von 5 oder 6 Ringatomen. Beispiele für 5-Ring Heterocyclen, welche neben Kohlenstoffatomen ein bis vier Stickstoffatome und/oder ein Schwefel- oder Sauerstoffatom als Ringglieder enthalten können, sind Furan, Thiophen, Pyrrol, Isoxazol, 3-Isothiazol, Pyrazol, Oxazol, Thiazol, Imidazol, 1,2,4-Oxadiazot, 1,2,5-Oxadiazol, 1,3,4-Oxadiazol, 1,2,3-Triazol oder 1,2,4-Triazol. Beispiele für 6-gliedrige Heteroarylgruppen, welche ein bis vier Stickstoffatome und/oder ein Phosphoratom enthalten können, sind Pyridin, Phosphabenzol, Pyridazin, Pyrimidin, Pyrazin, 1,3,5-Triazin, 1,2,4-Triazin oder 1,2,3-Triazin. Die 5-Ring und 6-Ring Heterocyclen können hierbei auch durch C₁-C₁₀-Alkyl, C₆-C₁₀-Aryl, Alkylaryl mit 1 bis 10 C-Atomen im Alkylrest und 6-10 C-Atomen im Arylrest, Trialkylsilyl oder Halogenen, wie Fluor, Chlor oder Brom substituiert oder mit ein oder mehreren Aromaten oder Heteroaromaten kondensiert sein. Beispiele für benzokondensierte 5-gliedrige Heteroarylgruppen sind Indol, Indazol, Benzofuran, Benzothiophen, Benzothiazol, Benzoxazol oder Benzimidazol. Beispiele für benzokondensierte 6-gliedrige Heteroarylgruppen sind Chroman, Benzopyran, Chinolin, Isochinolin, Cinnolin, Phthalazin, Chinazolin, Chinoxalin, 1,10-Phenanthrolin oder Chinolizin. Bezeichnung und Nummerierung der Heterocyclen wurde aus Lettau, Chemie der Heterocyclen, 1. Auflage, VEB, Weinheim 1979 entnommen. Die Heterocyclen sind mit dem Cyclopentadienyl-Grundgerüst bevorzugt Ober eine C-C-Doppelbindung des Heterocyclus kondensiert. Heterocyclen mit einem Heteroatom sind bevorzugt 2,3- oder b- anneliert.

Durch die Variation der Substituenten R^{1A}-R^{5A}, welche nicht den Heterocyclus aufbauen, kann ebenfalls Einfluss auf das Polymerisationsverhalten und die Löslichkeit der erfindungsgemässen Monocyclopentadienylkomplexe genommen werden. Durch die Zahl und Art der Substituenten kann die Zugänglichkeit des Metallatoms M für die zu polymerisierenden Olefine beeinflußt werden. So ist es möglich die Aktivität und Selektivität des Katalysators hinsichtlich verschiedener Monomerer, insbesondere sterisch anspruchsvoller Monomerer, zu modifizieren. Da die Substituenten auch auf die Geschwindigkeit von Abbruchreaktionen der wachsenden Polymerkette Einfluß nehmen können, läßt sich hierdurch auch das Molekulargewicht der entstehenden Polymere verändern. Die chemische Struktur der Substituenten R^{1A} bis R^{5A} kann daher in weiten Bereichen variiert werden, um die gewünschten Ergebnisse zu erzielen und ein maßgeschneidertes Katalysatorsystem zu erhalten. Als C-organische Substituenten R^{1A}-R^{5A} kommen beispielsweise folgende in Betracht: C₁-C₂₀-Alkyl, wobei das Alkyl linear oder verzweigt sein kann, wie z.B. Methyl, Ethyl, n-Propyl, iso-Propyl, n-Butyl, iso-Butyl, tert-Butyl, n-Pentyl, n-Hexyl, n-Heptyl, n-Octyl, n-Nonyl, n-Decyl oder n-Dodecyl, 5- bis 7-gliedriges Cycloalkyl, das seinerseits eine C₆-C₁₀-Arylgruppe als Substituent tragen kann, wie z.B. Cyclopropan, Cyclobutan, Cyclopentan, Cyclohexan, Cycloheptan, Cyclooctan, Cyclononan oder Cyclododekan, C₂-C₂₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooctenyl oder Cyclooktadienyl, C₆-C₂₀-Aryl, wobei der Arylrest durch weitere Alkylgruppen substituiert sein kann, wie z.B. Phenyl, Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6- oder 3,4,5-Trimethylphenyl, oder Arylalkyl, wobei das Arylalkyl durch weitere Alkylgruppen substituiert sein kann, wie z.B. Benzyl, o-, m-, p-Methylbenzyl, 1- oder 2-Ethylphenyl, wobei gegebenenfalls auch zwei R^{1A} bis R^{5A} zu einem 5- oder 6-gliedrigen Ring verbunden sein können und die organischen Reste R^{1A}-R^{5A} auch durch Halogene, wie z.B. Fluor, Chlor oder Brom substituiert sein können. Als Si-organische Substituenten SiR^{6A}₃ kommen für R^{6A} die gleichen Reste, wie oben für R^{1A}-R^{5A} näher ausgeführt, wobei gegebenenfalls auch zwei R^{6A} zu einem 5- oder 6-gliedrigen Ring verbunden sein können, in Betracht, wie z.B. Trimethylsilyl, Triethylsilyl, Butyldimethylsilyl, Tributylsilyl, Triallylsilyl, Triphenylsilyl oder Dimethylphenylsilyl. Bevorzugt Reste R^{1A}-R^{5A} sind Wasserstoff, Methyl, Ethyl, n-Propyl, iso-Propyl, n-Butyl, iso-Butyl, tert.-Butyl, n-Pentyl, n-Hexyl, n-Heptyl, n-Octyl, Vinyl, Allyl, Benzyl, Phenyl, ortho Dialkyl- oder Dichlorosubstituierte Phenyle, Trialkyl- oder Trichlorosubstituierte Phenyle, Naphthyl, Biphenyl und AnthPanyl. Als Si-organische Substituenten kommen besonders Trialkylsilyl-Gruppen mit 1 bis 10 C-Atomen im Alkylrest in Betracht, insbesondere Trimethylsilyl-Gruppen. Des weiteren sind auch solche Verbindungen bevorzugt in denen zusätzlich zwei vicinale Reste R^{1A}-R^{5A} ein cyclisches kondensiertes Ringsystem ausbilden, also zusammen mit dem E^{1A}-E^{5A}-, bevorzugt C₅-Cyclopentadienyl-Grundgerüst z.B. ein unsubstituiertes oder substituiertes Indenyl-, Benzindenyl- oder Tetrahydroindenylsystem bilden.

Cyclopentadienylsytemen HCp mit einem kondensierten Heterocyclus sind beispielsweise Thiapentalen, 2-Methylthiapentalen, 2-Ethylthiapentalen, 2-Isopropylthiapentalen, 2-n-Butylthiapentalen, 2-tert.-Butylthiapentalen, 2-Trimethylsilylthiapentalen, 2-Phenylthiapentalen, 2-Naphthylthiapentalen, 3- Methylthiopentalen, 4-Phenyl-2,6-dimethyl-1-thiopentalen, 4-Phenyl-2,6-diethyl-1-thiopentalen, 4-Phenyl-2,6-diisopropyl-1-thiopentalen, 4-Phenyl-2,6-di-n-butyl-1-thiopentalen, 4-Phenyl-2,6-di-trimethylsilyl-1-thiopentalen, Azapentalen, 2-Methylazapentalen, 2-Ethylazapentalen, 2-Isopropylazapentalen, 2-n-Butylazapentalen, 2-Trimethylsilylazapentalen, 2-Phenylazapentalen, 2-Naphthylazapentalen, 1-Phenyl-2,5-dimethyl-1-azapentalen, 1-Phertyl-2,5-diethyl-1-azapentalen, 1-Phenyl-2,5-di-n-butyl-1-azapentalen, 1-Phenyl-2,5-di-tert.-butyl-1-azapentalen, 1-Phenyl-2,5-di-trimethylsilyl-1-azapentalen, 1-tert.Butyl-2,5-dimethyl-1-azapentalen, Oxapentalen, Phosphapentalen, 1-Phenyl-2,5-dimethyl-1-phosphapentaien, 1-Phenyl-2,5-diethyl-1-phosphapentalen, 1-Phenyl-2,5-di-n-butyl-1-phosphapentalen, 1-Phenyl-2,5-di-tert.-butyl-1-phosphapentalen, 1-Phenyl-2,5-di-trimethylsilyl-1-phosphapentalen, 1-Methyl-2,5-dimethyl-1-phosphapentalen, 1-tert.Butyl-2,5-dimethyl-1-phosphapentalen, 7-Cyclopenta[1,2]thiophen[3,4]-cyclopentadiene oder 7-Cyclopenta[1,2]pyrrol[3,4]cyclopentadiene.

In weiteren bevorzugten Cyclopentadienylsytemen HCp bilden vier der Reste R^{1A}-R^{5A}, also zweimal je zwei vicinale Reste zusammen, zwei Heterocyclen aus. Die heterocyclischen Systeme sind gleich wie weiter oben näher ausgeführt Cyclopentadienylsytemen HCp mit zwei kondensierten Heterocyclen sind beispielsweise 7-Cyclopentadithiophen, 7-Cyclopentadipyrrol oder 7-Cyclopentadiphosphol.

Die Synthese derartiger Cyclopentadienylsytemen HCp ist beispielsweise in der Eingangs erwähnten WO 98/22486 beschrieben. In "metalorganic catalysts for synthesis and polymerisation", Springer Verlag 1999, sind von Ewen et al., S.150 ff weitere Synthesen von Cyclopentadienylsytemen HCp beschrieben.

Wie auch bei den Metallocenen können die erfindungsgemässen Monocyclopentadienylkomplexe chiral sein. So kann einerseits einer der Substituenten R^{1A}-R^{5A} des Cyclopentadienyl-Grundgerüstes ein oder mehrere chirale Zentren besitzen, oder aber das Cyclopentadienylsystem HCp selbst kann enantiotop sein, so daß erst durch dessen Bindung an das Übergangsmetall M die Chiralität induziert wird (zum Formalismus der Chiralität bei Cyclopentadienylverbindungen siehe R. Halterman, Chem. Rev. 92, (1992), 965-994).

Y ist ein an HCp gebundener Substituent, enthaltend mindestens einen neutralen Donor, welcher ein Atom der Gruppen 15 oder 16 des Periodensystems enthält Der Substituent Y kann dabei an das Cyclopentadienyl-Grundgerüst oder den Heterocyclus gebunden sein. Bevorzugt ist der Y an das Cyclopentadienyl-Grundgerüst gebunden und ersetzt einen Substituenten R^{1A}-R^{5A}. Ganz besonders bevorzugt ist Y neben dem kondensierten Heterocyclus an das Cyclopentadienyl-Grundgerüst gebunden. Ist also der heterocyclus in der 2,3-Position des Cyclopentadien-Grundgerüstes kondensiert, so sitzt Y bevorzugt in der 1- oder 4-Position Cyclopentadien-Grundgerüstes. Der Donor in Y kann dabei inter- oder intramolekular an das Metall M binden. Bevorzugt ist der Donor in Y intramolekular an M gebunden. Als Donor kommen neutrale funktionelle Gruppen, welche ein Element der 15. oder 16. Gruppe des Periodensystems enthalten, z.B. Amin, Imin, Carboxamid, Carbonsäureester, Keton (Oxo), Ether, Thioketon, Phosphin, Phosphit, Phosphinoxid, Sulfonyl, Sulfonamid, oder unsubstituierte, substituierte oder kondensierte, heterocyclische Ringsysteme in Betracht. Die Anbinsung von Y an den kann z.B. in Analogie zu M. Enders et. al. in Chem. Ber. (1996), 129, 459-463 oder P. Jutzi und U. Siemeling in J. Orgmet. Chem. (1995), 500, 175-185 durchgeführt werden.

M ist ein Metall der Gruppen 3, 4, 5, oder 6 des Periodensystems, wie beispielsweise Scandium, Yttrium, Titan, Zirkon, Hafnium, Vanadium, Molybdän, Tantal, Chrom, Molybdän oder Wolfram. Ganz besonders bevorzugt ist M Titan oder Chrom. Die Metallkomplexe, insbesondere die Chromkomplexe, lassen sich auf einfache Weise erhalten, wenn man die entsprechenden Metallsalze wie z.B. Metallchloride mit dem Ligandanion umsetzt (z.B. analog zu den Beispielen in DE 19710615).

Von den erfindungsgemässen Monocyclopentadienylkomplex sind solche der allgemeinen Formel (HCp)YMXₖ bevorzugt, worin die Variablen folgende Bedeutung haben:
- HCp: ein Cyclopentadienyl-System mit mindestens einem kondensierten Heterocyclus
- Y: ein an HCp gebundener Substituent, enthaltend mindestens einen neutralen Donor, welcher ein Atom der Gruppen 14 oder 15 des Periodensystems enthält
- M: ein Metall der Gruppen 3, 4, 5 oder 6 des Periodensystems
- X: unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR¹R², OR¹, SR¹, SO₃R¹, OC(O)R¹, CN, SCN, β-Diketonat, -CO, BF₄-, PF₆-, oder sperrige nichtkoordinierende Anionen,
- R¹-R²: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR³₃, wobei die organischen Reste R¹-R² auch durch Halogene substituiert sein können und je zwei Reste R¹-R² auch zu einem fünf- oder sechsgliedrigen Ring verbunden sein können,
- R³: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei Reste R³ auch zu einem fünf- oder sechsgliedrigen Ring verbunden sein können und
- k: 1, 2, oder 3 ist.

Die weiter oben aufgeführten Ausführungsformen und bevorzugten Ausführungsformen für HCp und Y gelten auch für diese bevorzugten Monocyclopentadienylkomplexe.

M ist ein Metall der Gruppen 3, 4, 5 oder 6 des Periodensystems, bevorzugt der Gruppen 4, 5 oder 6 des Periodensystems, wie beispielsweise Titan, Zirkon, Hafnium, Vanadium, Molybdän, Tantal, Chrom, Molybdän oder Wolfram. Ganz besonders bevorzugt ist M Titan in der Oxidationsstufe 3 oder Chrom, insbesondere in der Oxidationsstufe 3 oder 4.

Die Liganden X ergeben sich z.B. durch die Auswahl der entsprechenden Metallausgangsverbindungen, die zur Synthese der Monocyclopentadienylkomplexe verwendet werden, können aber auch nachträglich noch variiert werden. Als Liganden X kommen insbesondere die Halogene wie Fluor, Chlor, Brom oder Jod und darunter insbesondere Chlor in Betracht. Auch Alkylreste, wie Methyl, Ethyl, Propyl, Butyl, Vinyl, Allyl, Phenyl oder Benzyl stellen vorteilhafte Liganden X dar. Als weitere Liganden X sollen nur exemplarisch und keineswegs abschließend Trifluoracetat, BF₄⁻, PF₆⁻ sowie schwach bzw. nicht koordinierende Anionen (siehe z.B. S. Strauss in Chem. Rev. 1993, 93, 927-942) wie B(C₆F₅)₄⁻ genannt werden.

Auch Amide, Alkoholate, Sulfonate, Carboxylate und β-Diketonate sind besonders geeignete Liganden X. Durch Variation der Reste R¹ und R² können z.B. physikalische Eigenschaften wie Löslichkeit fein eingestellt werden. Als C-organische Substituenten R¹-R² kommen beispielsweise folgende in Betracht: C₁-C₂₀-Alkyl, wobei das Alkyl linear oder verzweigt sein kann, wie z.B. Methyl, Ethyl, n-Propyl, iso-Propyl, n-Butyl, iso-Butyl, tert.-Butyl, n-Pentyl, n-Hexyl, n-Heptyl, n-Octyl, n-Nonyl, n-Decyl oder n-Dodecyl, 5- bis 7-gliedriges Cycloalkyl, das seinerseits eine C₆-C₁₀-Arylgruppe als Substituent tragen kann, wie z.B. Cyclopropan, Cyclobutan, Cyclopentan, Cyclohexan, Cycloheptan, Cyclooctan, Cyclononan oder Cyclododekan, C₂-C₂₀-Alkenyl, wobei das Alkenyl linear, cyclisch oder verzweigt sein kann und die Doppelbindung intern oder endständig sein kann, wie z.B. Vinyl, 1-Allyl, 2-Allyl, 3-Allyl, Butenyl, Pentenyl, Hexenyl, Cyclopentenyl, Cyclohexenyl, Cyclooctenyl oder Cyclooktadienyl, C₆-C₂₀-Aryl, wobei der Arylrest durch weitere Alkylgruppen substituiert sein kann, wie z.B. Phenyl, Naphthyl, Biphenyl, Anthranyl, o-, m-, p-Methylphenyl, 2,3-, 2,4-, 2,5-, oder 2,6-Dimethylphenyl, 2,3,4-, 2,3,5-, 2,3,6-, 2,4,5-, 2,4,6- oder 3,4,5-Trimethylphenyl, oder Arylalkyl, wobei das Arylalkyl durch weitere Alkylgruppen substituiert sein kann, wie z.B. Benzyl, o-, m-, p-Methylbenzyl, 1- oder 2-Ethylphenyl, wobei gegebenenfalls auch R¹ mit R² zu einem 5- oder 6-gliedrigen Ring verbunden sein können und die organischen Reste R¹-R² auch durch Halogene, wie z.B. Fluor, Chlor oder Brom substituiert sein können. Als Si-organische Substituenten SiR³₃ kommen für R³ die gleichen Reste, wie oben für R¹-R² näher ausgeführt, wobei gegebenenfalls auch zwei R³ zu einem 5- oder 6-gliedrigen Ring verbunden sein können, in Betracht, wie z.B. Trimethylsilyl, Triethylsilyl, Butyldimethylsilyl, Tributylsilyl, Triallylsilyl, Triphenylsilyl oder Dimethylphenylsilyl. Bevorzugt werden C₁-C₁₀-Alkyl wie Methyl, Ethyl, n-Propyl, n-Butyl, tert.-Butyl, n-Pentyl, n-Hexyl, n-Heptyl, n-Octyl, sowie Vinyl, Allyl, Benzyl und Phenyl als Reste R¹ und R² verwendet. Manche dieser substituierten Liganden X werden ganz besonders bevorzugt verwendet, da sie aus billigen und einfach zugänglichen Ausgangsstoffen erhältlich sind. So ist eine besonders bevorzugte Ausführungsform, wenn X für Dimethylamid, Methanolat, Ethanolat, Isopropanolat, Phenolat, Naphtholat, Triflat, p-Toluolsulfonat, Acetat oder Acetylacetonat steht.

Die Anzahl k der Liganden X hängt von der Oxidationsstufe des Übergangsmetalles M ab. Die Zahl k kann somit nicht allgemein angegeben werden. Die Oxidationsstufe der Übergangsmetalle M in katalytisch aktiven Komplexen, sind dem Fachmann zumeist bekannt. Chrom, Molybdän und Wolfram liegen sehr wahrscheinlich in der Oxidationsstufe +3 vor. Es können jedoch auch Komplexe eingesetzt werden, deren Oxidationsstufe nicht der des aktiven Katalysators entspricht. Solche Komplexe können dann durch geeignete Aktivatoren entsprechend reduziert oder oxidiert werden. Bevorzugt werden Chromkomplexe in der Oxidationsstufe +3 oder + 4 und Titankomplexe in der Oxidationsstufe +3 oder +4 verwendet.

In bevorzugten Monocyclopentadienylkomplexen bilden das Cyclopentadienylsystem HCp und Y einen Liganden (HCp-Y) der Formel II: 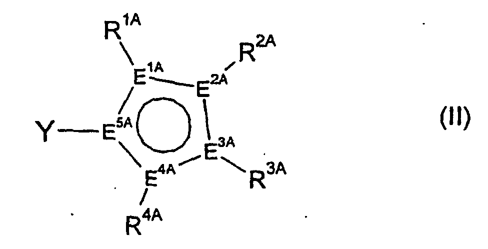 Worin die Variablen Y, E^{1A} bis E^{5A} und R^{6A} die obige Bedeutung besitzen und auch deren bevorzugte Ausführungsformen hierin bevorzugt sind und
- R^{1A}-R^{4A}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR^{6A}₃, wobei die organischen Reste R^{1A}-R^{4A} auch durch Halogene substituiert sein können und je zwei vicinale Reste R^{1A}-R^{4A} auch zu einem fünf- oder sechsgliedrigen Ring verbunden sein können, mit der Bedingung, dass mindestens zwei vicinale Reste R^{1A}-R^{4A} zu einem Heterocyclus verbunden sind, welcher mindestens ein Atom aus den Gruppen 15 oder 16 des Periodensystems enthält.

Für R^{1A}-R^{4A} gelten ebefalls die weiter oben beschriebenen Ausführungen und die bevorzugten Ausführungsformen.

In besonders bevorzugten Monocyclopentadienylkomplexen ist Y ein Substituent der allgemeinen Formel -Zₘ-A, worin die Variablen folgende Bedeutung haben:
- Z: eine divalente Brücke zwischen A und HCp
- A: NR⁴R⁵, PR⁴R⁵, OR⁴, SR⁴ oder ein unsubstituiertes, substituiertes oder kondensiertes, heterocyclisches Ringsystem,
- R⁴-R⁵: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR⁶₃, wobei die organischen Reste R⁴-R⁵ auch durch Halogene substituiert sein können und je zwei Reste R⁴-R⁵ auch zu einem fünf- oder sechsgliedrigen Ring verbunden sein können,
- R⁶: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei Reste R⁶ auch zu einem fünf- oder sechsgliedrigen Ring verbunden sein können und
- m: 1 ist, oder wenn A ein unsubstituiertes, substituiertes oder kondensiertes, heteroaromatisches Ringsystem ist, auch 0 sein kann.

A kann z.B. zusammen mit der Brücke Z ein Amin, Ether, Thioether oder Phoshin bilden. A kann aber auch ein unsubstituiertes, substituiertes oder kondensiertes, heterocyclisches, bevorzugt heteroaromatisches Ringsystem darstellen, welches neben Kohlenstoffringgliedem Heteroatome aus der Gruppe Sauerstoff, Schwefel, Stickstoff und Phosphor enthalten kann. Beispiele für 5-Ring Heteroarylgruppen, weiche neben Kohlenstoffatomen ein bis vier Stickstoffatome oder ein bis drei Stickstoffatome und/oder ein Schwefel- oder Sauerstoffatom als Ringglieder enthalten können, sind 2-Furyl, 2-Thienyl, 2-Pyrrolyl, 3-Isoxazolyl, 5-Isoxazolyl, 3-Isothiazolyl, 5-Isothiazolyl, 1-Pyrazolyl, 3-Pyrazolyl, 5-Pyrazolyl, 2-Oxazolyl, 4-Oxazolyl, 5-Oxazolyl, 2-Thiazolyl, 4-Thiazolyl, 5-Thiazolyl, 2-Imidazolyl, 4-Imidazolyl, 5-Imidazolyl, 1,2,4-Oxadiazol-3-yl, 1,2,4-Oxadiazol-5-yl, 1,3,4-Oxadiazol-2-yl oder 1,2,4-Triazol-3-yl. Beispiele für 6-gliedrige Heteroarylgruppen, welche ein bis vier Stickstoffatome und/oder ein Phosphoratom enthalten können, sind 2-Pyridinyl, 2-Phasphabenzolyl 3-Pyridazinyl, 2-Pyrimidinyl, 4-Pyrimidinyl, 2-Pyrazinyl, 1,3,5-Triazin-2-yl und 1,2,4-Triazin-3-yl, 1,2,4-Triazin-5-yl oder 1,2,4-Triazin-6-yl. Die 5-Ring und 6-Ring Heteroarylgruppen können hierbei auch durch C₁-C₁₀-Alkyl, C₆-C₁₀-Aryl, Alkylaryl mit 1 bis 10 C-Atomen

im Alkylrest und 6-10 C-Atomen im Arylrest, Trialkylsilyl oder Halogenen, wie Fluor, Chlor oder Brom substituiert oder mit ein oder mehreren Aromaten oder Heteroaromaten kondensiert sein. Beispiele für benzokondensierte 5-gliedrige Heteroarylgruppen sind 2-Indolyl, 7-Indolyl, 2-Cumaronyl, 7-Cumaronyl, 2-Thionaphthenyl, 7-Thionaphthenyl, 3-Indazolyl, 7-Indazolyl, 2-Benzimidazolyl oder 7-Benzimidazolyl. Beispiele für benzokondensierte 6-gliedrige Heteroarylgruppen sind 2-Chinolyl, 8-Chinolyl, 3-Cinnolyl, 8-Cinnolyl, 1-Phthalazyl, 2-Chinazolyl, 4-Chinazolyl, 8-Chinazolyl, 5-Chinoxalyl, 4-Acridyl, 1-Phenanthridyl oder 1-Phenazyl. Von diesen heteroaromatischen Systemen sind besonders substituiertes und unsubstituiertes 2-Pyridyl und 8-Chinolyl bevorzugt.

Durch geeignete Wahl der Reste R⁴ bis R⁵ kann ebenfalls Einfluß auf die Aktivität des Katalysators und das Molekulargewicht des entstehenden Polymeren genommen werden. Als Substituenten R⁴ bis R⁵ kommen die gleichen Reste, wie für R¹-R² beschrieben in Betracht, wobei gegebenenfalls auch zwei vicinale Reste R⁴ bis R⁵ zu einem 5- oder 6-gliedrigen Ring verbunden sein können und auch durch Halogene, wie Fluor, Chlor oder Brom substituiert sein können. Bevorzugte Reste R⁴ bis R⁵ sind Wasserstoff, Methyl, Ethyl, n-Propyl, iso-Propyl, n-Butyl, tert.-Butyl, n-Pentyl, n-Hexyl, n-Heptyl, n-Octyl, Vinyl, Allyl, Benzyl, Phenyl, Naphthyl, Biphenyl und Anthranyl. Ebenfalls bevorzugt sind Strukturen in denen R⁴ bis R⁵ einen Heterocyclus mit dem sie tragenden Heteroatom bilden, wie Pyrrolidin oder Piperidin. Als Si-organische Substituenten kommen besonders Trialkylsilyl-Gruppen mit 1 bis 10 C-Atomen im Alkylrest in Betracht, insbesondere Trimethylsilyl-Gruppen.

Die Verbrückung Z zwischen dem Gyclopentadienylsystem HCp und der funktionellen Gruppe A ist ein organisches Diradikal, bestehend aus Kohlenstoff und/oder Silizium Einheiten mit einer Kettenlänge von 1 bis 5. Z kann dabei an das Cyclopentadienyl-Grundgerüst oder an den Heterocyclus gebunden sein. Bevorzugt ist Z and das Cyclopentadienyl-Grundgerüst gebunden. Durch eine Änderung der Verknüpfungslänge zwischen Cyclopentadienylsystem und Heteroatom-Donor A kann die Aktivität des Katalysators beeinflußt werden. Bevorzugte Z sind 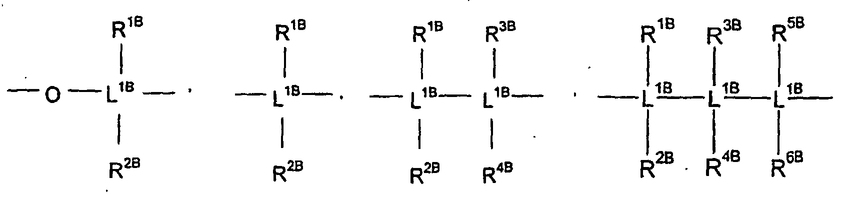 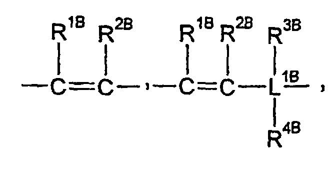 = BR^{1B},= BNR^{1B}R^{2B}, = AIR^{1B}, -Ge-, -Sn-, -O-, -S-, = SO, = SO₂, = NR^{1B}, = CO, = PR^{1B} oder = P(O)R^{1B} ist,
wobei
- R^{1B}-R^{6B}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR^{7B}₃, wobei die organischen Reste R^{1B}-R^{6B} auch durch Halogene substituiert sein können und je zwei Reste R^{1B}-R^{6B} auch zu einem fünf- oder sechsgliedrigen Ring verbunden sein können,
- R^{7B}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei Reste R^{7B} auch zu einem fünf- oder sechsgliedrigen Ring verbunden sein können und
- L^{1B}: Kohlenstoff, Silicium oder Germanium, bevorzugt Kohlenstoff oder Silicium ist,

Als Substituenten R^{1B} bis R^{6B} kommen die gleichen Reste, wie für R¹-R² beschrieben in Betracht, wobei gegebenenfalls auch zwei geminale oder vicinale Reste R^{1B} bis R^{6B} zu einem 5- oder 6-gliedrigen Ring verbunden sein können und auch durch Halogene, wie Fluor, Chlor oder Brom substituiert sein können. Bevorzugte Reste R^{1B} bis R^{6B} sind Wasserstoff, Methyl, Ethyl, n-Propyl, iso-Propyl, n-Butyl, tert.-Butyl, n-Pentyl, n-Hexyl, n-Heptyl, n-Octyl, Vinyl, Allyl, Benzyl, Phenyl, Naphthyl, Biphenyl und Anthranyl. Als Si-organische Substituenten kommen besonders Trialkylsilyl-Gruppen mit 1 bis 10 C-Atomen im Alkylrest in Betracht, insbesondere Trimethylsilyl-Gruppen.

In bevorzugten Monocyclopentadienylkomplex bilden das Cyclopentadienylsystem HCp und -Z-A- einen Liganden (Cp-Z-A) der Formel III: 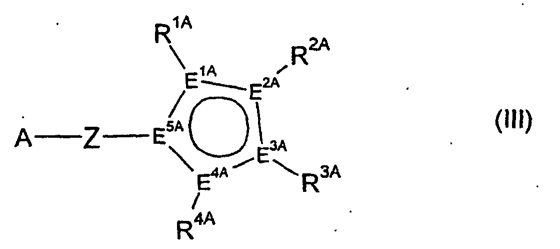 Worin die Variablen A, Z, E^{1A} bis E^{5A} und R^{6A} die obige Bedeutung besitzen und auch deren bevorzugte Ausführungsformen hierin bevorzugt sind und
- R^{1A}-R^{4A}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR^{6A}₃, wobei die organischen Reste R^{1A}-R^{4A} auch durch Halogene substituiert sein können und je zwei vicinale Reste R^{1A}-R^{4A} auch zu einem fünf- oder sechsgliedrigen Ring verbunden sein können, mit der Bedingung, dass mindestens zwei vicinale Reste R^{1A}-R^{4A} zu einem Heterocyclus verbunden sind, welcher mindestens ein Atom aus den Gruppen 15 oder 16 des Periodensystems enthält.

Für R^{1A}-R^{4A} gelten ebefalls die weiter oben beschriebenen Ausführungen und die bevorzugten Ausführungsformen.

Unter diesen Monocyclopentadienylkomplexen sind besonders solche bevorzugt, worin
- m: 1 und
- A: NR⁴R⁵, PR⁴R⁵, OR⁴ oder SR⁴, bevorzugt NR⁴R⁵ oder PR⁴R⁵ ist und
- Z: eine divalente Brücke ist, ausgewählt aus der folgenden Gruppe 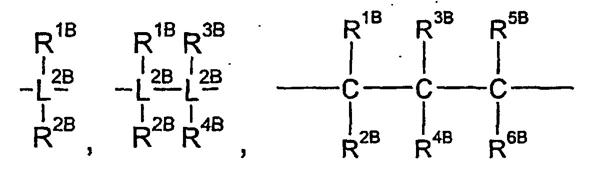 wobei
L^{2B} unahängig voneinander Kohlenstoff oder Silizium bedeutet,
R^{1B}-R^{6B} unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{7B}₃ bedeutet, wobei die organischen Reste R^{1B}-R^{6B} auch durch Halogene substituiert sein können und je zwei geminale oder vicinale Reste R^{1B}-R^{6B} auch zu einem fünf- oder sechsgliedrigen Ring verbunden sein können und
R^{7B} unabhängig voneinander Wasserstoff, C₁-C₂₀-Alkyl, C₂-C₂₀-Alkenyl, C₆-C₂₀-Aryl oder Alkylaryl mit 1 bis 10 C-Atomen im Alkylrest und 6-20 C-Atomen im Arylrest bedeutet und je zwei Reste R^{7B} auch zu einem fünf- oder sechsgliedrigen Ring verbunden sein können.

Die weiter oben aufgeführten Ausführungsformen und bevorzugten Ausführungsformen für R^{1B}-R^{7B} gelten auch für diese bevorzugten Monocyclopentadienylkomplexe. Bevorzugt wegen der einfachen Darstellbarkeit ist die Kombination von Z gleich CH₂, SiMe₂, CH=CH oder 1,2-Phenylen mit A gleich NR⁴R⁵ oder PR⁴R⁵.

Eine weitere bevorzugte Ausführungsform sind Monocyclopentadienylkomplex, worin
- A: ein unsubstituiertes, substituiertes oder kondensiertes, heteroaromatisches Ringsystem und
- Z: 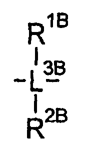 wobei
L^{3B} unahängig voneinander Kohlenstoff oder Silizium bedeutet,
R^{1B}-R^{2B} unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{7B}₃ bedeutet, wobei die organischen Reste R^{1B}-R^{2B} auch durch Halogene substituiert sein können und je zwei Reste R^{1B}-R^{2B} auch zu einem fünf- oder sechsgliedrigen Ring verbunden sein können und
R^{7B} unabhängig voneinander Wasserstoff, C₁-C₂₀-Alkyl, C₂-C₂₀-Alkenyl, C₆-C₂₀-Aryl oder Alkylaryl mit 1 bis 10 C-Atomen im Alkylrest und 6-20 C-Atomen im Arylrest bedeutet und je zwei Reste R^{7B} auch zu einem fünf- oder sechsgliedrigen Ring verbunden sein können.
m 0 oder 1 ist.

Die weiter oben aufgeführten Ausführungsformen und bevorzugten Ausführungsformen für R^{1B}-R^{2B} und R^{7B} gelten auch für diese bevorzugten Monocyclopentadienylkomplexe.

In diesen bevorzugten Ausführungsformen ist A ein unsubstituiertes, substituiertes oder kondensiertes, heteroaromatisches Ringsystem. Hierbei sind einfache Systeme bevorzugt, die leicht zugänglich und billig sind und aus der folgenden Gruppe ausgewählt sind: 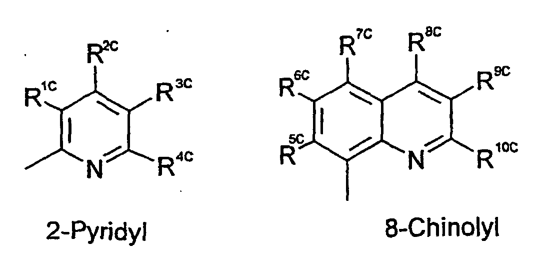
- R^{1C}-R^{10C}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{11C}₃ bedeutet, wobei die organischen Reste R^{1C}-R^{10C} auch durch Halogene substituiert sein können und je zwei vicinale Reste R^{1C}-R^{10C} auch zu einem fünf- oder sechsgliedrigen Ring verbunden sein können und
- R^{11C}: unabhängig voneinander Wasserstoff, C₁-C₂₀-Alkyl, C₂-C₂₀-Alkenyl, C₆-C₂₀-Aryl oder Alkylaryl mit 1 bis 10 C-Atomen im Alkylrest und 6-20 C-Atomen im Arylrest bedeutet und je zwei Reste R^{11C} auch zu einem fünf- oder sechsgliedrigen Ring verbunden sein können.

Als Substituenten R^{1C} bis R^{10C} kommen die gleichen Reste, wie für R¹-R² beschrieben in Betracht, wobei gegebenenfalls auch zwei vicinale Reste R^{1C} bis R^{10C} zu einem 5- oder 6-gliedrigen Ring verbunden sein können und auch durch Halogene, wie Fluor, Chlor oder Brom substituiert sein können. Bevorzugte Reste R^{1C} bis R^{10C} sind Wasserstoff, Methyl, Ethyl, n-Propyl, iso-Propyl, n-Butyl, tert.-Butyl, n-Pentyl, n-Hexyl, n-Heptyl, n-Octyl, Benzyl, Phenyl, Naphthyl, Biphenyl und Anthranyl. Als Si-organische Substituenten kommen besonders Trialkylsilyl-Gruppen mit 1 bis 10 C-Atomen im Alkylrest in Betracht, insbesondere Trimethylsilyl-Gruppen.

Eine bevorzugte Kombination von Z und A ist dabei, wenn A ein unsubstituiertes oder substituiertes 2-Pyridyl, m gleich 1 und Z gleich CH₂, CMe₂ oder SiMe₂ ist.

Ganz besonders einfach zugänglich und damit bevorzugte Monocyclopentadienylkomplexe sind auch solche ohne Brücke Z, bei denen m gleich 0 ist und A ein unsubstituiertes oder substituiertes 8-Chinolyl. Bevorzugt ist in diesen Komplexen R^{5C} bis R^{10C} gleich Wasserstoff, oder R^{5C} bis R^{9C} ein Wasserstoff und R^{10C} Methyl, Ethyl, n-Propyl, iso-Propyl, n-Butyl, tert.-Butyl, n-Pentyl, n-Hexyl, n-Heptyl, n-Octyl, Benzyl, Phenyl, Naphthyl, Biphenyl oder Anthranyl. Diese sind einfach darstellbar und liefern gleichzeitig sehr hohe Aktivitäten.

Die erfindungsgemässen Monocyclopentadienylkomplexe können allein oder mit weiteren Komponenten als Katalysatorsystem zur Olefinpolymerisation verwendet werden. Es wurden weiterhin Katalysatorsystem zur Olefinpolymerisation gefunden, enthaltend
A) mindestens einen erfindungsgemässen Monocyclopentadienylkomplex
B) optional einen organischen oder anorganischen Träger,
C) optional eine oder mehrere kationenbildende Verbindung,
D) optional ein oder mehrere zur Olefinpolymerisation geeignete Katalysatoren und
E) optional eine oder mehrere Metallverbindungen der Gruppe 1, 2 oder 13 des Periodensystems.

So kann mehr als einer der erfindungsgemässen Monocyclopentadienylkomplexe gleichzeitig mit dem oder den zu polymerisierenden Olefinen in Kontakt gebracht werden. Dies hat den Vorteil, daß so ein weiter Bereich an Polymeren erzeugt werden kann. Auf diese Weise können z.B. bimodale Produkte hergestellt werden.

Damit die erfindungsgemässen Monocyclopentadienylkomplexe bei Polymerisationsverfahren in der Gasphase oder in Suspension eingesetzt werden können, ist es oftmals von Vorteil, daß die Metallocene in Form eines Feststoffs eingesetzt werden, d.h. daß sie auf einen festen Träger B) aufgebracht werden. Weiterhin weisen die geträgerten Monocyclopentadienylkomplexe eine hohe Produktivität auf. Die erfindungsgemässen Monocyclopentadienylkomplexe können daher optional auch auf einem organischen oder anorganischen Träger B) immobilisiert und in geträgerter Form in der Polymerisation verwendet werden. Dies ist eine gängige Methode, um Reaktorablagerungen zu vermeiden und die Polymermorphologie zu steuern. Als Trägermaterialien werden bevorzugt Kieselgel, Magnesiumchlorid, Aluminiumoxid, mesoporöse Materialien, Aluminosilikate, Hydrotalcite und organische Polymere wie Polyethylen, Polypropylen oder Polystyrol verwendet.

Als feste Trägermaterialien B) für Katalysatoren für die Olefinpolymerisation werden bevorzugt Kieselgele verwendet, da sich aus diesem Material Partikel herstellen lassen, die in ihrer Größe und Struktur als Träger für die Olefinpolymerisation geeignet sind. Besonders bewährt haben sich dabei sprühgetrocknete Kieselgele, bei denen es sich um sphärische Agglomerate aus kleineren granulären Partikel, den sogenannten Primärpartikeln, handelt. Die Kieselgele können dabei vor ihrer Verwendung getrocknet und/oder calciniert werden.

Ebenfalls bevorzugte Träger B) sind Hydrotalcite und calcinierte Hydrotalcite. In der Mineralogie wird als Hydrotalcit ein natürliches Mineral mit der Idealformel

Mg₆Al₂(OH)₁₆CO₃ · 4 H₂O

bezeichnet, dessen Struktur sich von derjenigen des Brucits Mg(OH)₂ ableitet. Brucit kristallisiert in einer Schichtstruktur mit den Metallionen in Oktaedertücken zwischen zwei Schichten aus dichtgepackten Hydroxylionen, wobei nur jede zweite Schicht der Oktaederlücken besetzt ist. Im Hydrotalcit sind einige Magnesiumionen durch Aluminiumionen ersetzt, wodurch das Schichtpaket eine positive Ladung erhält. Diese wird durch die Anionen ausgeglichen, die sich zusammen mit Kristallwasser in den Zwischenschichten befinden.

Entsprechende Schichtstrukturen finden sich nicht nur bei Magnesium-Aluminium-Hydroxiden, sondern allgemein bei schichtförmig aufgebauten, gemischten Metallhydroxiden der allgemeinen Formel

M(II)₂ₓ²⁺M(III)₂³⁺(OH)₄ₓ₊₄ · A_{2/n}ⁿ⁻ · z H₂O

in der M(II) ein zweiwertiges Metall wie Mg, Zn, Cu, Ni, Co, Mn, Ca und/oder Fe und M(III) ein dreiwertiges Metall wie Al, Fe, Co, Mn, La, Ce und/oder Cr ist, x für Zahlen von 0,5 bis 10 in 0,5 Schritten, A für ein interstitielles Anion und n für die Ladung des interstitiellen Anions steht, die von 1 bis 8, üblicherweise von 1 bis 4 betragen kann und z eine ganze Zahl von 1 bis 6, insbesondere von 2 bis 4 bedeutet Als interstitielle Anionen kommen organische Anionen wie Alkoholatanionen, Alkylethersulfate, Arylethersulfate oder Glykolethersulfate, anorganische Anionen wie insbesondere Carbonat, Hydrogencarbonat, Nitrat, Chlorid, Sulfat oder B(OH)₄⁻ oder Polyoxometallanionen wie Mo₇O₂₄⁶⁻ oder V₁₀O₂₈⁶⁻ in Betracht Es kann sich jedoch auch um eine Mischung mehrerer solcher Anionen handeln.

Dementsprechend sollen alle derartigen schichtförmig aufgebauten, gemischten Metallhydroxide als Hydrotalcite im Sinne der vorliegenden Erfindung verstanden werden.

Aus Hydrotalciten lassen sich durch Calcinieren, d.h. Erwärmen, die sogenannten calcinierten Hydrotalcite herstellen, wodurch u.a. der gewünschte Gehalt an Hydroxylgruppen eingestellt werden kann. Weiterhin verändert sich auch die Struktur des Kristallaufbaus. Die Herstellung der erfindungsgemäß eingesetzten calcinierten Hydrotalcite erfolgt üblicherweise bei Temperaturen oberhalb von 180°C. Bevorzugt ist eine Calcinierung für eine Zeitdauer von 3 bis 24 Stunden bei Temperaturen von 250°C bis 1000°C und insbesondere von 400°C bis 700°C. Gleichzeitiges Überleiten von Luft oder Inertgas oder Anlegen von Vakuum ist möglich.

Beim Erhitzen geben die natürlichen oder synthetischen Hydrotalcite zunächst Wasser ab, d.h. es erfolgt eine Trocknung. Beim weiteren Erhitzen, dem eigentlichen Calcinieren, wandeln sich die Metallhydroxide unter Abspaltung von Hydroxylgruppen und interstitiellen Anionen in die Metalloxide um, wobei auch in den calcinierten Hydrotalciten noch OH-Gruppen oder interstitielle Anionen wie Carbonat enthalten sein können. Ein Maß hierfür ist der Glühverlust. Dieser ist der Gewichtsverlust, den eine Probe erleidet, die in zwei Schritten zunächst für 30 min bei 200°C in einem Trockenschrank und dann für 1 Stunde bei 950°C in einem Muffelofen erhitzt wird.

Bei den als Komponente B) eingesetzten calcinierten Hydrotalciten handelt es sich somit um Mischoxide der zwei- und dreiwertigen Metalle M(II) und M(III), wobei das molare Verhältnis von M(II) zu M(III) in der Regel im Bereich von 0,5 bis 10, bevorzugt von 0,75 bis 8 und insbesondere von 1 bis 4 liegt. Weiterhin können noch übliche Mengen an Verunreinigungen, beispielsweise an Si, Fe, Na, Ca oder Ti und auch Chloride und Sulfate enthalten sein.

Bevorzugte calcinierte Hydrotalcite B) sind Mischoxide, bei denen M(II) Magnesium und M(III) Aluminium ist Entsprechende Aluminium-Magnesium-Mischoxide sind von der Fa. Condea Chemie GmbH, Hamburg unter dem Handelsnamen Puralox Mg erhältlich.

Bevorzugt sind weiterhin calcinierte Hydrotalcite, in denen die strukturelle Umwandlung nahezu oder vollständig abgeschlossen ist. Eine Calcinierung, d.h. eine Umwandlung der Struktur läßt sich beispielsweise anhand von Röntgendiffraktogrammen feststellen.

Die eingesetzten Hydrotalcite, calcinierten Hydrotalcite oder Kieselgele werden in der Regel als feinteilige Pulver mit einem mittleren Teilchendurchmesser D50 von 5 bis 200 µm, vorzugsweise von 10 bis 150 µm, besonders bevorzugt von 15 bis 100 µm und insbesondere von 20 bis 70 µm eingesetzt und weisen üblicherweise Porenvolumina von 0,1 bis 10 cm³/g, bevorzugt von 0,2 bis 5 cm³/g, und spezifische Oberflächen von 30 bis 1000 m²/g, bevorzugt von 50 bis 800 m²/g und insbesondere von 100 bis 600 m²/g auf. Die erfindungsgemässen Monocyclopentadienylkomplexe werden dabei bevorzugt in einer Menge aufgebracht, dass die Konzentration Monocyclopentadienylkomplexe im fertigen Katalysatorsystem 10 bis 200 µmol, bevorzugt 20 bis 100 µmol und besonders bevorzugt 25 bis 70 µmol pro g Träger B) beträgt.

Die erfindungsgemäßen Monocyclopentadienylkomplexe sind für sich teilweise nur wenig polymerisationsaktiv und werden dann mit einem Aktivator, der Komponente C), in Kontakt gebracht um gute Polymerisationsaktivität entfalten zu können. Weiterhin enthält das Katalysatorsystem daher optional als Komponente C) eine oder mehrere kationenbildende Verbindung, bevorzugt mindestens eine kationenbildende Verbindung C).

Geeignete kationenbildende Verbindungen C), die in der Lage sind, durch Reaktion mit dem Monocyclopentadienylkomplexe A) diesen in eine kationische Verbindung zu überführen, sind z. B. Verbindungen vom Typ eines Aluminoxans, einer starken neutralen Lewis-Säure, einer ionischen Verbindung mit lewissaurem Kation oder einer ionischen Verbindung mit Brönsted-Säure als Kation.

Als Aluminoxane können beispielsweise die in der WO 00/31090, beschriebenen Verbindungen eingesetzt werden. Besonders geeignet sind offenkettige oder cyclische Aluminoxanverbindungen der allgemeinen Formeln (F X) oder (F XI) 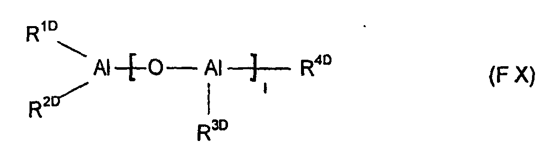 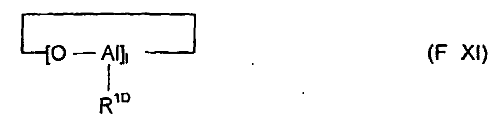
- wobei R^{1D}-R^{4D}: unabhängig voneinander eine C₁-C₆-Alkylgruppe bedeutet, bevorzugt eine Methyl-, Ethyl-, Butyl- oder isobutylgruppe und I für eine ganze Zahl von 1 bis 30, bevorzugt 5 bis 25 steht.

Eine insbesondere geeignete Aluminoxanverbindung ist Methylaluminoxan.

Die Herstellung dieser oligomeren Aluminoxanverbindungen erfolgt üblicherweise durch kontrollierte Umsetzung einer Lösung von Trialkylaluminium mit Wasser. In der Regel liegen die dabei erhaltenen oligomeren Aluminoxanverbindungen als Gemische unterschiedlich langer, sowohl linearer als auch cyclischer Kettenmoleküle vor, so daß I als Mittelwert anzusehen ist. Die Aluminoxanverbindungen können auch im Gemisch mit anderen Metallalkylen, üblicherweise mit Aluminiumalkylen vorliegen. Als Komponente C) geeignete Aluminoxan-Zubereitungen sind kommerziell erhältlich.

Weiterhin können als Komponente C) anstelle der Aluminoxanverbindungen der allgemeinen Formeln (F X) oder (F XI) auch modifizierte Aluminoxane eingesetzt werden, bei denen teilweise die Kohlenwasserstoffreste oder durch Wasserstoffatome, Alkoxy-, Aryloxy-, Siloxy-, oder Amidreste ersetzt sind.

Es hat sich als vorteilhaft erwiesen, die Monocyclopentadienylkomplexe A) und die Aluminoxanverbindungen in solchen Mengen zu verwenden, daß das atomare Verhältnis zwischen Aluminium aus den Aluminoxanverbindungen einschliesslich noch enthaltenem Aluminiumalkyl, und dem Übergangsmetall aus dem Monocyclopentadienylkomplex A) im Bereich von 10:1 bis 1000:1, bevorzugt von 20:1 bis 500:1 und insbesondere im Bereich von 30:1 bis 400:1, liegt.

Als starke, neutrale Lewissäuren sind Verbindungen der allgemeinen Formel (F XII)

M^{2D}X^{1D}X^{2D}X^{3D} (F XII)

bevorzugt, in der
- M^{2D}: ein Element der 13. Gruppe des Periodensystems der Elemente bedeutet, insbesondere B, Al oder Ga, vorzugsweise B,
- X^{1D}, X^{2D} und X^{3D}: für Wasserstoff, C₁-C₁₀-Alkyl, C₆-C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Weitere Beispiele für starke, neutrale Lewissäuren sind in der WO 00/31090 genannt.

Insbesondere sind als Komponente C) Borane und Boroxine geeignet, wie z. B. Trialkylboran, Triarylboran oder Trimethylboroxin. Besonders bevorzugt werden Borane eingesetzt, welche mindestens zwei perfluorierte Arylreste tragen. Besonders bevorzugt sind Verbindungen der allgemeinen Formel (F XII), in der X^{1D}, X^{2D} und X^{3D} gleich sind, vorzugsweise Tris(pentafluorphenyl)boran.

Starke neutrale Lewissäuren, die sich als kationenbildende Verbindungen C) eignen, sind auch die Reaktionsprodukte aus der Umsetzung einer Boronsäure mt zwei Äquivalenten eines Aluminiumtrialkyls oder die Reaktionsprodukte aus der Umsetzung eines Aluminiumtrialkyls mit zwei Äquivalenten einer aciden fluorierten, insbesondere perfluorierten Kohlenstoffverbindung wie Pentafluorphenol oder Bis-(pentafluorphenyl)-borinsäure.

Als ionische Verbindungen mit lewissauren Kationen sind salzartige Verbindungen des Kations der allgemeinen Formel (F XIII)

[((M^{3D})^{a+})Q₁Q₂...Q_{z}]^{d+} (F XIII)

geeignet, in denen
- M^{3D}: ein Element der 1. bis 16. Gruppe des Periodensystems der Elemente bedeutet,
- Q₁ bis Q_{z}: für einfach negativ geladene Reste wie C₁-C₂₈-Alkyl, C₆-C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃-C₁₀-Cycloalkyl, welches gegebenenfalls mit C₁-C₁₀-Alkylgruppen substituiert sein kann, Halogen, C₁-C₂₈-Alkoxy, C₆-C₁₅-Aryloxy, Silyl- oder Mercaptylgruppen
- a: für ganze Zahlen von 1 bis 6 und
- z: für ganze Zahlen von 0 bis 5 steht,
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nichtkoordinierende Gegenionen, insbesondere Borverbindungen wie sie auch in der WO 91/09882 genannt werden, bevorzugt Tetrakis(pentafluorophenyl)borat.

Salze mit nicht koordinierenden Anionen können auch durch Zusammengabe einer Bor- oder Aluminiumverbindung, z.B. einem Aluminiumalkyl, mit einer zweiten Verbindung, die durch Reaktion zwei oder mehrere Bor- oder Aluminiumatome verknüpfen kann, z.B. Wasser, und einer dritten Verbindung, die mit der Bor- oder Aluminiumverbindung eine ionisierende ionische Verbindung bildet, z.B. Triphenylchlormethan, hergestellt werden. Zusätzlich kann eine vierte Verbindung, die ebenfalls mit der Bor- oder Aluminiumverbindung reagiert, z.B. Pentafluorphenol, hinzugefügt werden.

Ionische Verbindungen mit Brönsted-Säuren als Kationen haben vorzugsweise ebenfalls nichtkoordinierende Gegenionen. Als Brönstedsäure werden insbesondere protonierte Amin- oder Anilinderivate bevorzugt. Bevorzugte Kationen sind N,N-Dimethylanilinium, N,N-Dimethylcylohexylammonium und N,N-Dimethylbenzylammonium sowie Derivate der beiden letztgenannten.

Auch Verbindungen mit anionischen Borheterocyclen, wie sie in der WO 9736937 beschrieben sind eignen sich als Komponente C), insbesondere Dimethylaniliniumboratabenzole oder Tritylboratabenzole.

Bevorzugte ionische Verbindungen C) enthalten Borate, welche mindestens zwei perfluorierte Arylreste tragen. Besonders bevorzugt sind N,N-Dimethylaniliniumtetrakis-(pentafluorophenyl)borate und insbesondere N,N-Dimethyl-cyclohexylammoniumtetrakis(pentafluorophenyl)borat, N,N-Dimethylbenzylammoniumtetrakis(pentafluorophenyl)borat oder Trityltetrakispentafluorophenylborat.

Es können auch zwei oder mehrere Boratanionen miteinander verbunden sein, wie in dem Dianion [(C₆F₅)₂B-C₆F₄-B(C₆F₅)₂]²⁻, oder das Boratanion kann über eine Brücke mit einer geeigneten funktionellen Gruppe auf der Trägeroberfläche gebunden sein.

Weitere geeignete kationenbildende Verbindungen C) sind in der WO 00/31090 aufgelistet.

Die Menge an starken, neutralen Lewissäuren, ionischen Verbindungen mit lewissauren Kationen oder ionischen Verbindungen mit Brönsted-Säuren als Kationen beträgt bevorzugt 0,1 bis 20 Äquivalente, bevorzugt 1 bis 10 Äquivalente, bezogen auf den Monocyclopentadienylkomplex A).

Geeignete kationenbildende Verbindungen C) sind auch Bor-Aluminium-Verbindungen wie Di[bis(pentafluorphenylboroxy)]methylalan. Entsprechende Bor-Aluminium-Verbindungen sind beispielsweise die in der WO 99/06414 offenbart.

Es können auch Gemische aller zuvor genannten kationenbildenden Verbindungen C) eingesetzt werden. Bevorzugte Mischungen enthalten Aluminoxane, insbesondere Methylaluminoxan, und eine ionische Verbindung, insbesondere eine, die das Tetrakis(pentafluorphenyl)borat-Anion enthält, und/oder eine starke neutrale Lewissäure, insbesondere Tris(pentafluorphenyl)boran.

Vorzugsweise werden sowohl die Monocyclopentadienylkomplexe A) als auch die kadonenbildende Verbindungen C) in einem Lösungsmittel eingesetzt, wobei aromatische Kohlenwasserstoffe mit 6 bis 20 C-Atomen, insbesondere Xylole, Toluol, Pentan, Hexan, Heptan oder Mischungen von diesen bevorzugt sind.

Ein ebenfalls breites Produktspektrum kann durch Verwendung der erfindungsgemäßen Monocyclopentadienylkomplexe A) in Kombination mit mindestens einem weiteren für die Polymerisation von Olefinen geeigneten Katalysator D) erreicht werden. Daher kann als optionale Komponente D) ein oder mehrere zur Olefinpolymerisation geeignete Katalysatoren im Katalysatorsystem verwendet werden. Als Katalysatoren D) kommen hierbei besonders klassische Ziegler Natta Katalysatoren auf der Basis von Titan und klassische Phillips Katalysatoren auf der Basis von Chromoxiden in Betracht.

Als Komponente D) kommen prinzipiell alle organische Gruppen enthaltenden Verbindungen der Übergangsmetalle der 3. bis 12. Gruppe des Periodensystems oder der Lanthaniden in Betracht, die bevorzugt nach Reaktion mit den Komponenten C), in Anwesenheit von A) und optional B) und/oder E) für die Olefinpolymerisation aktive Katalysatoren bilden. Üblicherweise handelt es sich hierbei um Verbindungen, bei denen mindestens ein ein- oder mehrzähniger Ligand Ober Sigma- oder Pi-Bindung an das Zentralatom gebunden ist. Als Liganden kommen sowohl solche in Betracht, die Cyclopentadienylreste enthalten, als auch solche, die frei von Cyclopentadienylresten sind. In Chem. Rev. 2000, Vol. 100, Nr. 4 wird eine Vielzahl solcher für die Olefinpolymerisation geeigneter Verbindungen B) beschrieben. Weiterhin sind auch mehrkemige Cyclopentadienylkomplexe für die Olefinpolymerisation geeignet.

Besonders gut geeignete Komponenten D) sind auch solche mit mindestens einem Cyclopentadienyltyp-Liganden, die gemeinhin als Metallocenkomplexe bezeichnet werden. Hierbei eignen sich besonders Metallocenkomplexe der allgemeinen Formel (F XIV) 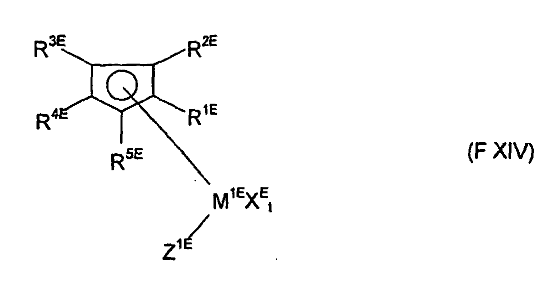 in der die Substituenten und Indizes folgende Bedeutung haben:
- M^{1E}: Titan, Zirkonium, Hafnium, Vanadium, Niob, Tantal, Chrom, Molybdän oder Wolfram, sowie Elemente der 3. Gruppe des Periodensystems und der Lanthaniden,
- X^{E}: Fluor, Chlor, Brom, Jod, Wasserstoff, C₁-C₁₀-Alkyl, C₂-C₁₀-Alkenyl, C₆-C₁₅-Aryl, Alkylaryl mit 1 bis 10 C-Atomen im Alkylrest und 6 bis 20 C-Atomen im Arylrest, -OR^{6E} oder -NR^{6E}R^{7E}, oder zwei Reste X^{E} für einen substituierten oder unsubstituierten Dientiganden, insbesondere einen 1,3-Dienliganden, stehen, und
- t: 1, 2 oder 3 ist, wobei t entsprechend der Wertigkeit von M^{1E} den Wert aufweist, bei dem der Metallocenkomplex der allgemeinen Formel (F XIV) ungeladen vorliegt,
wobei
- R^{6E} und R^{7E}: C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
die Reste X^{E} gleich oder verschieden sind und gegebenenfalls miteinander verbunden sind,
- R^{1E} bis R^{5E}: Wasserstoff, C₁-C₂₂-Alkyl, 5- bis 7-gliedriges Cycloalkyl oder Cycloalkenyl, die ihrererseits durch C₁-C₁₀-Alkyl substituiert sein können, C₂-C₂₂-Alkenyl, C₆-C₂₂-Aryl, Alkylaryl oder Arylalkyl, wobei auch zwei benachbarte Reste gemeinsam für 4 bis 44 C-Atome aufweisende gesättigte oder ungesättigte cyclische Gruppen stehen können, oder Si(R^{8E})₃ mit
- R^{8E}: gleich oder verschieden C₁-C₁₀-Alkyl, C₃-C₁₀-Cycloalkyl, C₆-C₁₅-Aryl, C₁-C₄-Alkoxy oder C₆-C₁₀-Aryloxy sein kann und
- Z^{1E}: für X^{E} oder 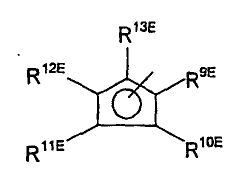 steht,
wobei die Reste
- R^{9E} bis R^{13E}: Wasserstoff, C₁-C₂₂-Alkyl, 5- bis 7-gliedriges Cycloalkyl oder Cycloalkenyl, die ihrererseits durch C₁-C₁₀-Alkyl substituiert sein können, C₂-C₂₂-Alkenyl, C₆-C₂₂-Aryl, Alkylaryl oder Arylalkyl, wobei auch zwei benachbarte Reste gemeinsam für 4 bis 44 C-Atome aufweisende gesättigte oder ungesättigte cyclische Gruppen stehen können, oder Si(R^{14E})₃ mit
- R^{14E}: gleich oder verschieden C₁-C₁₀-Alkyl, C₃-C₁₀-Cycloalkyl, C₆-C₁₅-Aryl, C₁-C₄-Alkoxy oder C₆-C₁₀-Aryloxy bedeuten,
oder wobei die Reste R^{4E} und Z^{1E} gemeinsam eine Gruppierung -R^{15E}ᵥ-A^{1E}- bilden, in der
- R^{15E}: 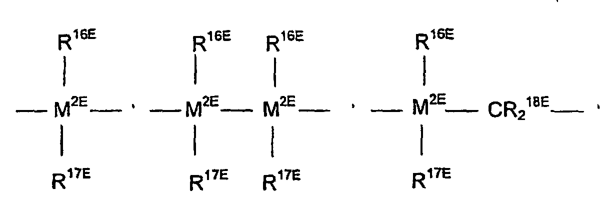 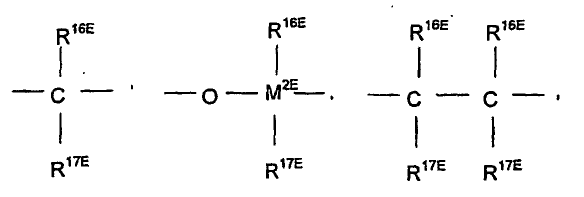 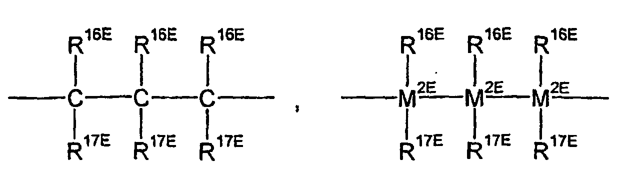 = BR^{16E},= BNR^{16E}R^{17E}, = AIR^{16E}, -Ge-, -Sn-, -O-, -S-, = SO, = SO₂, = NR^{16E}, = CO, = PR^{16E} oder = P(O)R^{16E} ist,
wobei
- R^{16E}, R^{17E} und R^{18E}: gleich oder verschieden sind und jeweils ein Wasserstoffatom, ein Halogenatom, eine Trimethylsilylgruppe, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₇-C₁₅-Alkylaryloxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
- M^{2E}: Silicium, Germanium oder Zinn ist, bevorzugt Silicium
- A^{1E}: -O-, -S-, 〉NR^{19E}, 〉PR^{19E}, -O-R^{19E}, -NR^{19E}₂, -PR^{19E}₂ oder ein unsubstituiertes, substituiertes oder kondensiertes, heterocyclisches Ringsystem bedeuten, mit
- R^{19E}: unabhängig voneinander C₁-C₁₀-Alkyl, C₆-C₁₅-Aryl, C₃-C₁₀-Cycloalkyl, C₇-C₁₈-Alkylaryl oder Si(R^{20E})₃,
- R^{20E}: Wasserstoff, C₁-C₁₀-Alkyl, C₆-C₁₅-Aryl, das seinerseits mit C₁-C₄-Alkylgruppen substituiert sein kann oder C₃-C₁₀-Cycloalkyl,
- v: 1 oder im Fall von A^{1E} gleich ein unsubstituiertes, substituiertes oder kondensiertes, heterocyclisches Ringsystem auch 0
oder wobei die Reste R^{4E} und R^{12E} gemeinsam eine Gruppierung -R^{15E}- bilden.

Bevorzugt sind die Reste X^{E} in der allgemeinen Formel (F XIV) gleich, bevorzugt Fluor, Chlor, Brom, C₁ bis C₇-Alkyl, oder Aralkyl, insbesondere Chlor, Methyl oder Benzyl.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium oder Chrom, bevorzugt ist.

### Beispiele für besonders geeignete Verbindungen D) sind u.a.:

Bis(cyclopentadienyl)zirkoniumdichlorid, Bis(pentamethylcyclopentadienyl)zirkoniumdichlorid, Bis(methylcyclopentadienyl)zirkoniumdichlorid, Bis(ethylcyclopentadienyl)zirkoniumdichlorid, Bis(n-butylcyclopentadienyl)zirkoniumdichlorid, Bis(1-n-butyl-3-methylcyclopentadienyl)-zirkoniumdichlorid, Bis(indenyl)zirkoniumdichlorid, Bis(tetrahydroindenyl)zirkoniumdichlorid und Bis(trimethylsilylcyclopentadienyl)zirkoniumdichlorid sowie die entsprechenden Dimethylzirkoniumverbindungen.

Als Komponente D) werden ausserdem bevorzugt verbrückte Bis-Indenyl-Komplexe in der Racoder Pseudo-Rac-Form eingesetzt, wobei es sich bei der pseudo-Rac-Form um solche Komplexe handelt, bei denen die beiden Indenyl-Liganden ohne Berücksichtigung aller anderen Substituenten des Komplexes relativ zueinander in der Rac-Anordnung stehen.

Weitere Beispiele für besonders geeignete Katalysatoren D) sind u.a. Dimethylsitandiylbis(cyclopentadienyl)zirkoniumdichlorid, Dimethylsilandiylbis(indenyl)zirkoniumdichlorid, Dimethylsilandiylbis(tetrahydroindenyl)zirkoniumdichlorid, Ethylenbis(cyclopentadienyl)zirkoniumdichlorid, Ethylenbis(indenyl)zirkoniumdichlorid, Ethylenbis(tetrahydroindenyl)zirkoniumdichlorid, Tetramethylethylen-9-fluorenylcyclopentadienylzirkoniumdichlorid, Dimethylsilandiylbis(3-tert.butyl-5-methylcyclopentadienyl)zirkoniumdichlorid, Dimethylsilandiylbis(3-tert.butyl-5-ethylcyclopentadienyl)-zirkoniumdichlorid, Dimethylsilandiylbis(2-methylindenyl)zirkoniumdichlorid, Dimethylsilandiylbis(3-methyl-5-methylcyclopentadienyl)zirkoniumdichlorid, Dimethylsilandiylbis(3-ethyl-5-isopropylcyclopentadienyl)zirkoniumdichlorid, Dimethylsilandiylbis(2-ethylindenyl)zirkoniumdichlorid, Dimethylsilandiylbis(2-methyl-4,5-benzindenyl)zirkoniumdichlorid, Dimethylsilandiylbis(2-ethyl-4,5-benzindenyl)zirkoniumdichlorid, Methylphenylsilandiylbis(2-methyl-4,5-benzindenyl)zirkoniumdichlorid, Methylphenylsilandiylbis(2-ethyl-4,5-benzindenyl)zirkoniumdichlorid, Diphenylsilandiylbis(2-methyl-4,5-benzindenyl)zirkoniumdichlorid, Dimethylsilandiylbis(2-methyl-4-phenyl-indenyl)zirkoniumdichlorid, Dimethylsilandiylbis(2-ethyl-4-phenyl-indenyl)zirkoniumdichlorid, Dimethylsilandiylbis(2-methyl-4-(1-naphthyl)-indenyl)-zirkoniumdichlorid, Dimethylsilandiylbis(2-ethyl-4-(1-naphthyl)-indenyl)zirkoniumdichlorid, Dimethylsilandiylbis(2-propyl-4-(1-naphthyl)-indenyl)zirkaniumdichlorid und Dimethylsilandiylbis(2-i-butyl-4-(1-naphthyl)-indenyl)-zirkoniumdichlorid, wobei diese Komplexe bevorzugt in der rac-Form eingesetzt werden.

Beispiele für entsprechende Herstellungsverfahren sind u.a. im Journal of Organometallic Chemistry, 369 (1989), 359-370 beschrieben.

Weiterhin bevorzugte Komponenten D) sind solche in denen die Reste R^{4E} und Z^{1E} gemeinsam eine Gruppierung -R^{15E}-A^{1E}- bilden.

Im Falle von A^{1E} gleich -O- , -S - , -NR^{19E}- und -PR^{19E}-, ist M^{1E} bevorzugt Titan, besonders bevorzugt Titan in der Oxidationsstufe +4. Besonders geeignete Komplexe D) sind hierbei Dimethylsilandiyl-(tetramethylcyclopentadienyl)(benzyl-amino)titandichlorid, Dimethylsilandiyl(tetramethylcyclopentadienyl)(tert.butyl-amino)titandichlorid, Dimethylsilandiyl-(tetramethylcyclopentadienyl)-(adamantyl)titandichlorid oder Dimethylsilandiyl(indenyl)(tert.butyl-amino)titandichlorid.

Im Falle von A^{1E} gleich ― O ― R^{19E}, ― NR^{19E}₂, ― PR^{19E}₂ oder einem unsubstituierten, substituierten oder kondensierten, heterocyclischen oder heteroaromatischen Ringsystem, ist M^{1E} bevorzugt Titan oder Chrom, wobei besonders bevorzugt Titan in der Oxidationsstufe +3 oder +4 und Chrom bevorzugt in der Oxidationsstufe +3 ist.

In einer bevorzugten Ausführungsform ist A^{1E} hierin ein unsubstituiertes, substituiertes oder kondensiertes, heteroaromatisches Ringsystem und M^{1E} Chrom. Ganz besonders bevorzugt ist A^{1B} ein unsubstituiertes oder substituiertes, z.B. alkylsubstituiertes, insbesondere in Position 8 verknüpftes Chinolyl, z.B. 8-Chinolyl, 8-(2-Methylchinolyl), 8-(2,3,4-Trimethylchinolyl), 8-(2,3,4,5,6,7-Hexamethylchinoiyl, v gleich 0 und M^{1E} gleich Chrom. Bevorzugte Katalysatoren D) dieser Art sind 1-(8-Chinolyl)-2-methyl-4-methylcyclopentadienylchrom(III)dichlorid, 1-(8-Chinolyl)-3-isopropyl-5-methylcyclopentadienylchrom(III)dichlorid, 1-(8-Chinolyl)-3-tert.butyl-5-methylcyclopentadienylchrom(III)dichlorid, 1-(8-Chinolyl)-2,3,4,5-tetramethylcyclopentadienylchrom(III)dichlorid, 1-(8-Chinolyl)tetrahydroindenylchrom(III)dichlorid, 1-(8-Chinolyl)indenylchrom(III)dichlorid, 1-(8-Chinolyl)-2-methylindenylchrom(III)dichlorid, 1-(8-Chinolyl)-2-isopropylindenylchrom(III)dichlorid, 1-(8-Chinolyl)-2-ethylindenylchrom(III)dichlorid, 1-(8-Chinolyl)-2-tert.butylindenylchrom(III)-dichlorid, 1-(8-Chinolyl)benzindenylchrom(III)dichlorid, 1-(8-Chinolyl)-2-methylbenzindenylchrom(III)dichlorid, 1-(8-(2-Methylchinolyl))-2-methyl-4-methylcyclopentadienylchrom(III)dichlorid, 1-(8-(2-Methylchinolyl))-2,3,4,5-tetramethylcyclopentadienylchrom(III)dichlorid, 1-(8-(2-Methylchinolyl))tetrahydroindenylchrom(III)dichlorid, 1-(8-(2-Methylchinolyl))indenylchrom(III)dichlorid, 1-(8-(2-Methylchinolyl))-2-methylindenylchrom(III)dichlorid, 1-(8-(2-Methylchinolyl))-2-isopropylindenylchrom(III)dichlorid, 1-(8-(2-Methylchinolyl))-2-ethylindenylchrom(III)dichlorid, 1-(8-(2-Methylchinolyl))-2-tert.butylindenylchrom(III)dichlorid, 1-(8-(2-Methylchinolyl))-benzindenylchrom(III)dichlorid oder 1-(8-(2-Methylchinolyl))-2-methylbenzindenylchrom(III)dichlorid.

Die Herstellung derartiger funktioneller Cyclopentadienyl-Liganden ist seit langer Zeit bekannt. Verschiedene Synthesewege für diese Komplexliganden werden z.B. von M. Enders et. al. in Chem. Ber. (9996), 129, 459-463 oder P. Jutzi und U. Siemeling in J. Orgmet. Chem. (1995), 500, 175-185 beschrieben.

Die Metallkomplexe, insbesondere die Chromkomplexe, lassen sich auf einfache Weise erhalten, wenn man die entsprechenden Metallsalze wie z.B. Metallchloride mit dem Ligandanion umsetzt (z.B. analog zu den Beispielen in DE-A-19710615).

Weitere geignete Katalysatoren D) sind Metallocene, mit mindestens einem Liganden, der aus einem Cyclopentadienyl oder Heterocyclopentadienyl mit einem ankondensierten Heterocyclus gebildet wird, wobei die Heterocyclen bevorzugt aromatisch sind und Stickstoff und/oder Schwefel enthalten. Derartige Verbindungen sind beispielsweise in der WO 98/22486 beschrieben. Dies sind insbesondere Dimethylsilandiyl-(2-methyl-4-phenyl-indenyl)-(2,5-dimethyl-N-phenyl-4-azapentalen)zirkoniumdichtorid, Dimethylsilandiyibis(2-methyl-4-phenyl-4-hydroazulenyl)zirkoniumdichlorid oder Dimethylsilandiylbis(2-ethyl-4-phenyl-4-hydroazulenyl)zirkonium-dichlorid.

Geignete Katalysatoren D) sind außerdem Imidochromverbindungen, worin Chrom als strukturelles Merkmal mindestens eine Imidogruppe trägt. Diese Verbindungen und deren Herstellung sind z.B. in der WO 01/09148 beschrieben.

Weitere geeignete Komponenten D) sind Übergangsmetallkomplexe mit einem dreizähnigen macrocyclischen Liganden, insbesondere substituierten und unsubstituierten 1,3,5-Triazacyclohexanen und 1,4,7-Triazacyclononanen. Bei dieser Art von Katalysatoren sind ebenfalls die Chromkomplexe bevorzugt. Bevorzugte Katalysatoren dieser Art sind [1,3,5-Tri(methyl)-1,3,5-Triazacyclohexan]chromtrichlorid, [1,3,5-Tri(ethyl)-1,3,5-Triazacyclohexan]chromtrichlorid, [1,3,5-Tri(octyl)-1,3,5-Triazacyclohexan]chromtrichlorid, [1,3,5-Tri(dodecyl)-1,3,5-Triazacyclohexan]-chromtrichlorid und [1,3,5-Tri(benzyl)-1,3,5-Triazacyclohexan]chromtrichlorid.

Geeignete Katalysatoren D) sind weiterhin zum Beispiel Übergangsmetallkomplexe mit mindestens einem Liganden der allgemeinen Formeln F XV bis F XIX, 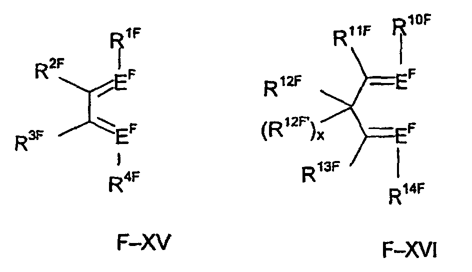 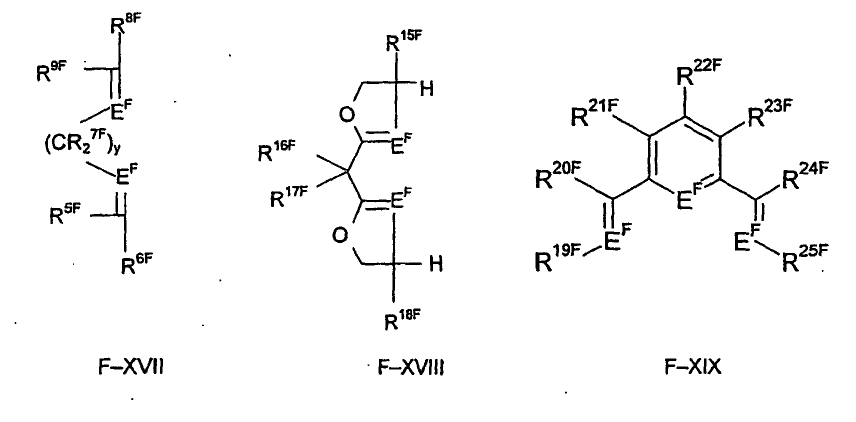 wobei das Übergangsmetall ausgewählt ist aus den Elementen Ti, Zr, Hf, Sc, V, Nb, Ta, Cr, Mo, W, Fe, Co, Ni, Pd, Pt oder ein Element der Seltenerd-Metalle. Bevorzugt sind hierbei Verbindungen mit Nickel, Eisen, Kobalt und Palladium als Zentralmetall.

E^{F} ist ein Element der 15. Gruppe des Periodensystems der Elemente bevorzugt N oder P, wobei N besonders bevorzugt ist. Die zwei oder drei Atome E^{F} in einem Molekül können dabei gleich oder verschieden sein.

Die Reste R^{1F} bis R^{25F}, die innerhalb eines Ligandsystems F-XV bis F-XIX gleich oder verschieden sein können, stehen dabei für folgende Gruppen:
- R^{1F} und R^{4F}: unabhängig voneinander für Kohlenwasserstoff- oder substituierte Kohlenwasserstoffreste, bevorzugt sind dabei Kohlenwasserstoffreste bei denen das dem Element E^{F} benachbarte Kohlenstoffatom mindestens mit zwei Kohlenstoffatomen verbunden ist,
- R^{2F} und R^{3F}: unabhängig voneinander für Wasserstoff, Kohlenwasserstoff- oder substituierte Kohlenwasserstoffreste, wobei R^{2F} und R^{3F} auch zusammen ein Ringsystem bilden können, in dem auch ein oder mehrere Heteroatome vorhanden sein können,
- R^{6F} und R^{8F}: unabhängig voneinander für Kohlenwasserstoff- oder substituierte Kohlenwasserstoffreste,
- R^{5F} und R^{9F}: unabhängig voneinander für Wasserstoff, Kohlenwasserstoff oder substituierte Kohlenwasserstoffreste,
- wobei R^{6F} und R^{5F} bzw. R^{8F} und R^{9F}: auch zusammen ein Ringsystem bilden können,
- R^{7F}: unabhängig voneinander für Wasserstoff, Kohlenwasserstoff- oder substituierte Kohlenwasserstoffreste, wobei zwei R^{7F} auch zusammen ein Ringsystem bilden können,
- R^{10F} und R^{14F}: unabhängig voneinander für Kohlenwasserstoff- oder substituierte Kohlenwasserstoffreste,
- R^{11F}, R^{12F}, R^{12F'} und R^{13F}: unabhängig voneinander für Wasserstoff, Kohlenwasserstoff oder substituierte Kohlenwasserstoffreste, wobei auch zwei oder mehr geminale oder vicinale Reste R^{11A}, R^{12A}, R^{12A'} und R^{13A} zusammen ein Ringsystem bilden können,
- R^{15F} und R^{18F}: unabhängig voneinander für Wasserstoff, Kohlenwasserstoff- oder substituierte Kohlenwasserstoffreste,
- R^{16F} und R^{17F}: unabhängig voneinander für Wasserstoff, Kohlenwasserstoff- oder substituierte Kohlenwasserstoffreste,
- R^{19F} und R^{25F}: unabhängig voneinander C₂-C₂₀-Alkenyl, C₆-C₂₀-Aryl, Alkylaryl mit 1 bis 10 C-Atomen im Alkylrest und 6-20 C-Atomen im Arylrest , wobei die organischen Reste R^{19F} und R^{25F} auch durch Halogene substituiert sein können,
- R^{20F}-R^{24F}: unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{26F}₃ bedeutet, wobei die organischen Reste R^{20F}-R^{24F} auch durch Halogene substituiert sein können und je zwei vicinale Reste R^{20F}-R^{24F} auch zu einem fünf- oder sechsgliedrigen Ring verbunden sein können und
- R^{26F}: unabhängig voneinander Wasserstoff, C₁-C₂₀-Alkyl, C₂-C₂₀-Alkenyl, C₆-C₂₀-Aryl oder Alkylaryl mit 1 bis 10 C-Atomen im Alkylrest und 6-20 C-Atomen im Arylrest bedeutet und je zwei Reste R^{26F} auch zu einem fünf- oder sechsgliedrigen Ring verbunden sein können.
- x: für 0 oder 1, wobei F-XVI für x gleich 0 negativ geladen ist und
- y: für eine ganze Zahl zwischen 1 und 4 bevorzugt 2 oder 3.

Besonders geeignete sind Übergangsmetallkomplexe mit Fe, Co, Ni, Pd oder Pt als Zentralmetall und Liganden der Formel F-XV. Besonders bevorzugt sind Diiminkomplexe des Ni oder Pd, z.B.:

Di(2,6-di-i-propyl-phenyl)-2,3-dimethyl-diazabutadien-palladiumdichlorid, Di(di-i-propyl-phenyl)-2,3-dimethyl-diazabutadien-nickel-dichlorid, Di(2,6-di-i-propyl-phenyl)-dimethyldiazabutadien-palladium-dimethyl, Di(2,6-di-i-propyl-phenyl)-2,3-dimethyl-diazabutadien-nickeldimethyl, Di(2,6-dimethyl-phenyl)-2,3-dimethyl-diazabutadien-palladiumdichlorid, Di(2,6-dimethyl-phenyl)-2,3-dimethyl-diazabutadien-nickel-dichlorid, Di(2,6-dimethyl-phenyl)-2,3-dimethyldiazabutadien-palladium-dimethyl, Di(2,6-dimethyl-phenyl)-2,3-dimethyl-diazabutadien-nickeldimethyl, Di(2-methyl-phenyl)-2,3-dimethyl-diazabutadien-palladium-dichlorid, Di(2-methylphenyl)-2,3-dimethyl-diazabutadien-nickel-dichlorid, Di(2-methyl-phenyl)-2,3-dimethyldiazabutadien-palladium-dimethyl, Di(2-methyl-phenyl)-2,3-dimethyl-diazabutadien-nickel-dimethyl, Diphenyl-2,3-dimethyl-diazabutadien-palladium-dichlorid, Diphenyl-2,3-dimethyldiazabutadien-nickel-dichlorid, Diphenyl-2,3-dimethyl-diazabutadien-palladium-dimethyl, Diphenyl-2,3-dimethyl-diazabutadien-nickel-dimethyl, Di(2,6-dimethyl-phenyl)-azanaphtenpalladium-dichlorid, Di(2,6-dimethyl-phenyl)-azanaphten-nickel-dichlorid, Di(2,6-dimethylphenyl)-azanaphten-palladium-dimethyl, Di(2,6-dimethyl-phenyl)-azanaphten-nickel-dimethyl, ten-palladium-dimethyl, Di(2,6-dimethyl-phenyl)-azanaphten-nickel-dimethyl, 1,1'-Dipyridylpalladium-dichlorid, 1,1'-Dipyridyl-nickel-dichlorid, 1,1'-Dipyridyl-palladium-dimethyl, 1,1'-Dipyridyl-nickel-dimethyl

Besonders geeignete Verbindungen F-XIX sind auch solche, die in J. Am. Chem. Soc. 120, S. 4049 ff. (1998), J. Chem. Soc., Chem. Commun. 1998, 849 und WO 98/27124 beschrieben sind. R^{19F} und R^{25F} sind in F-XIX bevorzugt Phenyl, Naphthyl, Biphenyl, Anthranyl, o-, m-, p-Methylphenyl, 2,3-, 2,4-, 2,5-, oder 2,6-Dimethylphenyl, -Dichlorphenyl, oder -Dibromphenyl, 2-Chlor-6-methylphenyl, 2,3,4-, 2,3,5-, 2,3,6-, 2,4,5-, 2,4,6- oder 3,4,5-Trimethylphenyl, insbesondere 2,3-oder 2,6-Dimethylphenyl, -Diisopropylphenyl, -Dichlorphenyl, oder -Dibromphenyl und 2,4,6-Trimethylphenyl. Gleichzeitig sind R^{20F} und R^{24F} bevorzugt Wasserstoff, Methyl, Ethyl, n-Propyl, iso-Propyl, n-Butyl, tert.-Butyl, n-Pentyl, n-Hexyl, n-Heptyl, n-Octyl, Benzyl oder Phenyl, insbesondere Wasserstoff oder Methyl. R^{21F} und R^{23F} sind bevorzugt Wasserstoff und R^{22F} bevorzugt Wasserstoff, Methyl, Ethyl oder Phenyl, insbesondere Wasserstoff. Bevorzugt sind Komplexe der Liganden F-XIX mit Übergangsmetallen Fe, Co oder Ni, insbesondere Fe. Besonders bevorzugt sind 2,6-Diacetylpyridinbis(2,4-dimethylphenylimin)eisendichlorid, 2,6-Diacetylpyridinbis(2,4,6-trimethylphenylimin)eisendichlorid, 2,6-Diacetylpyridinbis(2-chlor-6-methylphenyl)eisendichlorid, 2,6-Diacetylpyridinbis(2,6-diisopropylphenylimin)eisendichlorid, 2,6-Diacetylpyridinbis(2,6-dichlorphenylimin)eisendichlorid, 2,6-Pyridindicarboxaldehydbis(2,6-diisopropylphenylimin)eisendichlorid, 2,6-Diacetylpyridinbis(2,4-dimethylphenylimin)cobaltdichlorid, 2,6-Diacetylpyridinbis(2,4,6-trimethylphenylimin)cobaltdichlorid, 2,6-Diacetylpyridinbis(2-chlor-6-methylphenyl)cobaltdichlorid, 2,6-Diacetylpyridinbis(2,6-diisopropylphenylimin)cobaltdichlorid, 2,6-Diacetylpyridinbis(2,6-dichlorphenylimin)cobaltdichlorid und 2,6-Pyridindicarboxaldehydbis(2,6-diisopropylphenylimin)cobaltdichlorid.

Als Katalysatoren D) können auch Iminophenolat-Komplexe verwendet werden, wobei die Liganden beispielsweise ausgehend von substituierten oder unsubstituierten Salicylaldehyden und primären Aminen, insbesondere substituierten oder unsubstituierten Arylaminen, hergestellt werden. Auch Übergangsmetallkomplexe mit Pi-Liganden, die im Pi-System ein oder mehrere Heteroatome enthalten, wie beispielsweise der Boratabenzolligand, das Pyrrolylanion oder das Phospholylanion, lassen sich als Katalysatoren D) einsetzten

Durch derartige Kombinationen von Komponenten A) und D) können z.B. bimodale Produkte hergestellt oder in situ Comonomer erzeugt werden. Bevorzugt wird hierbei mindestens Monocyclopentadienylkomplex A) in Gegenwart von mindestens einem für die Polymerisation von Olefinen üblichen Katalysator D) und gewünschtenfalls ein oder mehreren kationenbildenden Verbindungen C) verwendet Hierbei sind je nach Katalysatorenkombinationen A) und D) ein oder mehrere kationenbildende Verbindungen vorteilhaft. Die Polymerisationskatalysatoren D) können ebenfalls geträgert sein und gleichzeitig oder in einer beliebigen Reihenfolge mit dem erfindungsgemäßen Komplex A) verwendet werden. Als Komponente D) können auch Mischungen verschiedener Katalysatoren eingesetzt werden.

Das Katalysatorsystem kann als weitere Komponente E) zusätzlich noch eine Metallverbindung der allgemeinen Formel (F-XX),

M^{G}(R^{1G})ᵣG(R^{2G})ₛG(R^{3G})ₜG (F-XX)

in der
- M^{G}: Li, Na, K, Be, Mg, Ca, Sr, Ba, Bor, Aluminium, Gallium, Indium oder Thallium bedeutet,
- R^{1G}: Wasserstoff, C₁-C₁₀-Alkyl, C₆-C₁₅-Aryl, Alkylaryl oder Arylalkyl mit jeweils 1 bis 10 C-Atom im Alkylrest und 6 bis 20 C-Atomen im Arylrest,
- R^{2G} und R^{3G}: Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
- r^{G}: eine ganze Zahl von 1 bis 3
und
- s^{G} und t^{G}: ganze Zahlen von 0 bis 2 bedeuten, wobei die Summe r^{G}+s^{G}+t^{G} der Wertigkeit von M^{G} entspricht,
enthalten, wobei die Komponente E) nicht identisch mit der Komponente C) ist. Es können auch Mischungen verschiedener Metallverbindungen der Formel (F-XX) eingesetzt werden.

Von den Metallverbindungen der allgemeinen Formel (F-XX) sind diejenigen bevorzugt, in denen
- M^{G}: Lithium; Magnesium oder Aluminium bedeutet und
- R^{2G} und R^{3G}: für C₁-C₂₀-Alkyl stehen.

Besonders bevorzugte Metallverbindungen der Formel (F-XX) sind Methyllithium, Ethyllithium, n-Butyllithium, Methylmagnesiumchlorid, Methylmagnesiumbromid, Ethylmagnesiumchlorid, Ethylmagnesiumbromid, Butylmagnesiumchlorid, Dimethylmagnesium, Diethylmagnesium, Dibutylmagnesium, n-Butyl-n-octylmagnesium, n-Butyl-n-heptyl-magnesium, insbesondere n-Butyl-n-octylmagnesium, Tri-n-hexyl-aluminium, Tri-iso-butyl-aluminium, Tri-n-butylaluminium, Triethylaluminium, Dimethylaluminiumchlorid, Dimethylaluminiumfluorid, Methylaluminiumdichlorid, Methylaluminiumsesquichlorid, Diethylaluminiumchlorid und Trimethylaluminium und Mischungen davon. Auch die partiellen Hydrolyseprodukte von Aluminiumalkylen mit Alkoholen können eingesetzt werden.

Wenn eine Metallverbindung E) eingesetzt wird, ist sie bevorzugt in einer solchen Menge im Katalysatorsystem enthalten, daß das molare Verhältnis von M^{G} aus Formel (F-XX) zu Übergangsmetall aus Monocyclopentadienylverbindung A) von 2000:1 bis 0,1:1, bevozugt von 800:1 bis 0,2:1 und besonders bevorzugt von 100:1 bis 1:1 beträgt

Bevorzugt wird zur Herstellung der erfindungsgemäßen Katalysatorsysteme mindestens eine der Komponenten A) zusammmen mit C) auf dem Träger B) durch Physisorption oder auch durch eine chemische Reaktion, das bedeutet eine kovalente Anbindung der Komponenten, mit reaktiven Gruppen der Trägeroberfläche fixiert. Die Reihenfolge der Zusammengabe von Trägerkomponente B), Komponente A) und gegebenenfalls Komponente C) ist beliebig. Die Komponenten A) und C) können unabhängig voneinander oder auch gleichzeitig oder vorvermischt zu B) zugegeben werden. Nach den einzelnen Verfahrensschritten kann der Feststoff mit geeigneten inerten Lösungsmitteln wie aliphatischen oder aromatischen Kohlenwasserstoffen gewaschen werden.

In einer bevorzugten Ausführungsform wird der Monocyclopentadienylkomplex A) in einem geeigneten Lösungsmittel mit der kationenbildenden Verbindung C) in Kontakt gebracht, wobei üblicherweise ein lösliches Reaktionsprodukt, ein Addukt oder ein Gemisch erhalten wird. Die so erhaltene Zubereitung wird dann mit dem gegebenenfalls vorbehandelten Träger B) in Kontakt gebracht, und das Lösungsmittel vollständig oder teilweise entfernt Bevorzugt erhält man dann einen Feststoff in Form eines frei fließenden Pulvers. Beispiele für die technische Realisierung des obigen Verfahrens sind in WO 96/00243, WO 98/40419 oder WO 00/05277 beschrieben. Einer weitere bevorzugte Ausführungsform ist, zunächst die kationenbildende Verbindung C) auf dem Träger B) zu erzeugen und anschließend diese geträgerte kationenbildende Verbindung mit dem Monocyclopentadienylkomplex A) in Kontakt zu bringen.

Die Komponente D) kann ebenfalls in beliebiger Reihenfolge mit den Komponenten A) und optional B), C) und E) umgesetzt werden. Bevorzugt wird D) zuerst mit Komponente C) in Kontakt gebracht und danach mit den Komponenten A) und B) und eventuell weiterem C) wie weiter oben verfahren. In einer anderen bevorzugten Ausführungsform wird ein Katalysatorfeststoff aus den Komponenten A), B) und C) wie weiter oben beschrieben dargestellt und dieser während, zu Beginn oder kurz vor der Polymerisation mit der Komponente E) in Kontakt gebracht. Bevorzugt wird E) zuerst mit dem zu polymerisierenden alpha-Olefin in Kontakt gebracht und anschliessend der Katalysatorfeststoff aus den Komponenten A), B) und C) wie weiter oben beschrieben, zugegeben.

Der Monocyclopentadienylkomplex A) kann dabei entweder vor oder nach Kontaktierung mit den zu polymerisierenden Olefinen mit der oder den Komponenten C) und/oder D) in Kontakt gebracht werden. Auch eine Voraktivierung mit ein oder mehreren Komponenten C) vor der Durchmischung mit dem Olefin und weitere Zugabe der gleichen oder anderer Komponenten C) und/oder D) nach Kontaktierung dieses Gemisches mit dem Olefin ist möglich. Eine Voraktivierung erfolgt in der Regel bei Temperaturen zwischen 10-100°C, bevorzugt zwischen 20-80°C.

Es ist weiterhin möglich, das Katalysatorsystem zunächst mit α-Olefinen, bevorzugt linearen C₂-C₁₀-1-Alkene und insbesondere mit Ethylen oder Propylen vorzupolymerisieren und dann den resultierenden vorpolymerisierten Katalysatorfeststoff bei der eigentlichen Polymerisation zu verwenden. Üblicherweise liegt das Massenverhältnis von bei der Vorpolymerisation eingesetztem Katalysatorfeststoff zu hinzupolymerisiertem Monomer im Bereich von 1:0, 1 bis 1:1000, bevorzugt 1:1 bis 1:200.

Weiterhin kann als Additiv während oder nach der Herstellung des Katalysatorsystems eine geringe Menge eines Olefins, bevorzugt eines α-Olefins, beispielsweise Vinylcyclohexan, Styrol oder Phenyldimethylvinylsilan, als modifizierende Komponente, ein Antistatikum oder eine geeignete inerte Verbindung wie eine Wachs oder Öl zugesetzt werden. Das molare Verhältnis von Additiven zu Übergangsmetallverbindung B) beträgt dabei üblicherweise von 1:1000 bis 1000:1, bevorzugt von 1:5 bis 20:1.

Die erfindungsgemäßen Katalysatorsysteme eignen sich zur Polymerisation von Olefinen und vor allem zur Polymerisation von α-Olefinen, d.h. Kohlenwasserstoffen mit endständigen Doppelbindungen. Geeignete Monomere können funktionalisierte olefinisch ungesättigte Verbindungen wie Acrolein, Ester- oder Amidderivate der Acryl- oder Methacrylsäure, beispielsweise Acrylate, Methacrylate oder Acrylnitril oder Vinylester, beispielsweise Vinylacetat sein. Bevorzugt sind unpolare olefinische Verbindungen, worunter auch arylsubstituierte α-Olefine fallen. Besonders bevorzugte α-Olefine sind lineare oder verzweigte C₂-C₁₂-1-Alkene, insbesondere lineare C₂-C₁₀-1-Alkene wie Ethylen, Propylen, 1-Buten, 1-Penten, 1-Hexen, 1-Hepten, 1-Octen, 1-Decen oder verzweigte C₂-C₁₀-1-Alkene wie 4-Methyl-1-penten, konjugierte und nicht konjugierte Diene wie 1,3-Butadien, 1,5-Hexadien, oder 1,7-Octadien oder vinylaromatische Verbindungen wie Styrol oder substituiertes Styrol. Es können auch Gemische aus verschiedenen α-Olefinen polymerisiert werden. Bevorzugt wird mindestens ein Olefin ausgewählt aus der Gruppe Ethen, Propen, 1-Buten, 1-Penten, 1-Hexen, 1-Hepten, 1-Octen und 1-Decen polymerisiert.

Geeignete Olefine sind auch solche, bei denen die Doppelbindung Teil einer cyclischen Struktur ist, die ein oder mehrere Ringsysteme aufweisen kann. Beispiele hierfür sind Cyclopenten, Cyclohexen, Norbomen, Tetracyclododecen oder Methylnorbomen oder Diene wie 5-Ethyliden-2-norbomen, Norbornadien oder Ethylnorbomadien.,

Es können auch Gemische aus zwei oder mehreren Olefinen polymerisiert werden. Im Gegensatz zu einigen bekannten Eisen- und Cobaltkomplexen zeigen die erfindungsgemässen Monocyclopentadienylkomplexe eine gute Polymerisationsaktivität auch mit höheren α-Olefinen, so daß ihre Eignung zur Copolymerisation besonders hervorzuheben ist. Insbesondere lassen sich die erfindungsgemäßen Monocyclopentadienylkomplexe zur Polymerisation oder Copolymerisation von Ethylen oder Propylen einsetzen. Als Comonomere bei der Ethylenpolymerisation werden bevorzugt C₃-C₈-α-Olefine, insbesondere 1-Buten, 1-Penten, 1-Hexen und/oder 1-Octen verwendet. Bevorzugt werden Monomermischungen mit mindestens 50 mol-% Ethylen verwendet. Bevorzugte Comonomere bei der Propylenpolymerisation sind Ethylen und/oder Buten.

Die Polymerisation kann in bekannter Weise in Masse, in Suspension, in der Gasphase oder in einem überkritischen Medium in den üblichen, für die Polymerisation von Olefinen verwendeten Reaktoren durchgeführt werden. Sie kann diskontinuierlich oder bevorzugt kontinuierlich in einer oder mehreren Stufen erfolgen. Es kommen Hochdruck-Polymerisationsverfahren in Rohrreaktoren oder Autoklaven, Lösungsverfahren, Suspensionsverfahren, gerührte Gasphasenverfahren oder Gasphasenwirbelschichtverfahren in Betracht

Die Polymerisationen werden üblicherweise bei Temperaturen im Bereich von -60 bis 350°C und unter Drücken von 0,5 bis 4000 bar bei mittleren Verweilzeiten von 0,5 bis 5 Stunden, bevorzugt von 0,5 bis 3 Stunden durchgeführt. Die vorteilhaften Druck- und Temperaturbereiche zur Durchführung der Polymerisationen hängen stark von der Polymerisationsmethode ab. Bei den Hochdruck-Polymerisationsverfahren, die üblicherweise bei Drücken zwischen 1000 und 4000 bar, insbesondere zwischen 2000 und 3500 bar, durchgeführt werden, werden in der Regel auch hohe Polymerisationstemperaturen eingestellt. Vorteilhafte Temperaturbereiche für diese Hochdruck-Polymerisationsverfahren liegen zwischen 200 und 320°C, insbesondere zwischen 220 und 290°C. Bei Niederdruck-Polymerisationsverfahren wird in der Regel eine Temperatur eingestellt, die mindestens einige Grad unter der Erweichungstemperatur des Polymerisates liegt Insbesondere werden in diesen Polymerisationsverfahren Temperaturen zwischen 50 und 180°C, vorzugsweise zwischen 70 und 120°C, eingestellt. Bei den Suspensionspolymerisationen wird üblicherweise in einem Suspensionsmittel, vorzugsweise in einem inerten Kohlenwasserstoff, wie beispielsweise iso-Butan, oder aber in den Monomeren selbst polymerisiert. Die Polymerisationstemperaturen liegen i.a. im Bereich von -20 bis 115°C, der Druck i.a. im Bereich von 1 bis 100 bar. Der Feststoffgehalt der Suspension liegt i.a. im Bereich von 10 bis 80 %. Es kann sowohl diskontinuierlich, z.B. in Rührautoklaven, als auch kontinuierlich, z.B. in Rohrreaktoren, bevorzugt in Schleifenreaktoren, gearbeitet werden. Insbesondere kann nach dem Phillips-PF-Verfahren, wie in der US-A 3 242 150 und US-A 3 248 179 beschrieben, gearbeitet werden. Die Gasphasenpolymerisation wird i.a. im Bereich von 30 bis 125°C durchgeführt.

Von den genannten Polymerisationsverfahren ist die Gasphasenpolymerisation, insbesondere in Gasphasenwirbelschicht-Reaktoren, die Lösungspolymerisation, sowie die Suspensionspolymerisation, insbesondere in Schleifen- und Rührkesselreaktoren, besonders bevorzugt. Die Gasphasenpolymerisation kann auch in der sogenannten condensed oder supercondensed Fahrweise durchgeführt werden, bei dem ein Teil des Kreisgases unter den Taupunkt gekühlt und als Zwei-Phasen-Gemisch in den Reaktor zurückgeführt wird. Die verschiedenen oder auch gleichen Polymerisationsverfahren können auch wahlweise miteinander in Serie geschaltet sein und so eine Polymerisationskaskade bilden. Weiterhin können bei den Polymerisationen auch Molmassenregler, beispielsweise Wasserstoff, oder übliche Zuschlagstoffe wie Antistatika mitverwendet werden.

Durch das erfindungsgemäßen Verfahren lassen sich Polymerisate von Olefinen darstellen. Der Begriff Polymerisation, wie er zur Beschreibung der Erfindung hier verwendet wird, umfaßt sowohl Polymerisation als auch Oligomerisation, d.h. Oligomere und Polymere mit Molmassen Mw im Bereich von etwa 56 bis 3000000 können durch diese Verfahren erzeugt werden.

Auf Grund ihrer guten mechanischen Eigenschaften eignen sich die mit dem erfindungsgemäßen Katalysatorsystem hergestellten Polymerisate von Olefinen vor allem für die Herstellung von Folien, Fasern und Formkörpern.

Die erfindungsgemäßen Katalysatorsysteme zeichnen sich dadurch aus, daß sie eine sehr hohe Produktivität bei der Polymerisation von Olefinen aufweisen, Vorteile bei der Aufarbeitung der Polymerisate nach der Polymerisation bieten, und zu deutlich weniger Problemen im Hinblick auf Katalysatorrückstände im Polymerisat führen. Die mit dem erfindungsgemäßen Katalysatorsystem hergestellten Polymerisate eigenen sich bevorzugt für solche Anwendungen, die eine hohe Produktreinheit erfordern. Die erfindungsgemässen Katalysatorsysteme zeigen ausserdem auch bei relativ niedrigem molaren Verhältnis von Alumoxan zu Organoübergangsmetall eine sehr gute Aktivität

### Beispiele

### Beispiel 1

Darstellung von 1-Pyrrolidin-2-[(2,5-dimethyl-thieno[3',2':3,4]cyclopenta[1,2-*b*]thiophen-7-yl)ethan]dichlorocromium

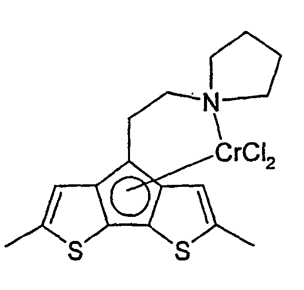

### a) Darstellung des Ligandsystems 1-Pyrrolidin-2-[(2,5-dimethyl-7H-thieno[3',2':4,5]cyclopenta[b]thiophen]ethan

Eine Lösung von 0,95 g (4,5 mmol) 2,5-Dimethyl-7*H*-thieno[3',2':3,4]cyclopenta[1,2-*b*]thiophen in 50 ml Diethylether wurde auf -78°C gekühlt und bei dieser Temperatur mit 2,8 ml (4,5 mmol) einer 1,6 M n-Butyllithium in Hexan versetzt. Man liess die entstandene Suspension langsam auf Raumtemperatur erwärmen und rührte anschliessend noch 45 Minuten bei Raumtemperatur. Dann wurde das Reaktionsgemisch erneut auf -78°C abgekühlt und bei dieser Temperatur eine Lösung von 0,6 g (4,5mmol) 1-Chloro-2-(1-pyrrolyl)ethan in 20 ml Diethylether zugetropft. Anschliessend liess man das entstandene Reaktionsgemisch langsam auf Raumtemperatur erwärmen und weitere 12 Stunden bei Raumtemperatur rühren.

Zur so erhaltenen Suspension wurden bei Raumtemperatur 2,8 ml einer 1,6 M Lösung von n-Butyllithium in Hexane (entspricht 4,5 mmol n-Butyllithium) gegeben, worauf sich ein Niederschlag bildete. Der Niederschalg wurde abgetrennt und zweimal mit Hexan gewaschen. Er kann entweder direkt mit dem Chromtrichlorid umgesetzt werden, oder ergibt hydrolysiert den Liganden. Dazu wurde der Niederschlag 30 ml wässriger Ammoniumchlorid-Lösung versetzt, zu dieser Mischung 50 ml Diethylether zugegeben und die organische Phase abgetrennt. Die wässrige Phase wurde noch zweimal mit jeweils 50 ml Diethylether extrahiert und die organischen Phasen kombiniert Die kombinierte organische Phase wurde mit 50 ml Wasser gewaschen, über Magnesiumsulfat getrocknet und anschliessend über eine kurze Säule über Kieselgel filtriert. Nach Entfernen des Lösungsmittels und trocknen im Hochvakuum wurden 1,14 g (84% Ausbeute) des Liganden als rot-braunes Öl erhalten.
NMR-Daten von 1-Pyrrolidin-2-[(2,5-dimethyl-7*H*-thieno[3',2':4,5]cyclopenta[*b*]thiophen]-ethan ¹H-NMR (CDCl₃, 25°C, δ): 6.76 (q, 2H), 3,95 (t, 1H), 2,68 (m, 2H,, 2,62 (m, 4H), 2,55 ( s, 6H), 2,10 (q, 2H), 1,83 (m, 4H);

### b) Darstellung von 2-Pyrrolidin-1-[2-(2,5-dimethyl-thieno[3',2':4,5]cyclopenta[b]thiophen-7-yl)ethan]chromdichlorid

Zu einer Lösung von 1,0 g (3,3 mmol) von 1-Pyrrolidin-2-[(2,5-dimethyl-7*H*-thieno[3',2':4,5]cyclopenta[*b*]thiophen-7-yl)ethan in 50 ml Toluol wurden bei -78°C 2,1 ml einer 1,6 M Lösung von n-Butyllithium in Hexan zugegeben. Anschliessend liess man das entstandene Reaktionsgemisch langsam auf Raumtemperatur erwärmen und weitere 5 Stunden bei Raumtemperatur rühren. Das Reaktionsgemisch wurde dann erneut auf -78°C abgekühlt und 1,3 g (3,3 mmol) CrCl₃x3THF zugegeben. Man liess man das entstandene Reaktionsgemisch langsam auf Raumtemperatur erwärmen, eine weitere Stunde bei Raumtemperatur rühren und dann eine weitere Stunde bei 50°C. Die Lösung wurde von unlöslichen Bestandteilen abfiltriert und das Lösungsmittel auf ein Volumen von 10 ml entfernt. Die so erhaltene konzentrierte Lösung wurde auf -30°C abgekühlt, der entstandene Niederschlag nach einem Tag abfiltriert, mit kaltem Toluol gewaschen und getrocknet Es konnten 0,61g des Chromkomplexes isoliert werden.

### Beispiel 2

Darstellung von 6-(8-Chinolyl)-2,5-dimethyl-3-phenyl-[cyclopenta[b]thiophen]chromdichlorid 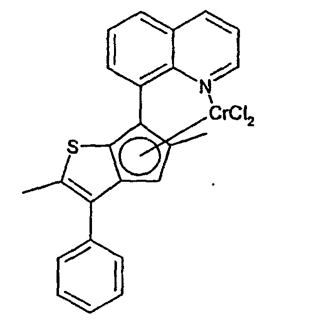
a) Darstellung des Liganden 6-(8-Chinolyl)-2,5-dimethyl-3-phenyl-[4-H-cyclopenta[b]thiophen] Eine Lösung von 1,16 g 8-Bromchinolin (5,6 mmol) in 15 ml THF wurde auf -80°C gekühlt und mit 3,5 ml einer 1,6 M Lösung von n-Butyllithium in Hexan (5,6 mmol) versetzt. Anschliessend liess man das entstandene Reaktionsgemisch weitere 20 Minuten bei -80°C rühren und gab dann eine Lösung von 1,35 g 4,5-Dihydro-2,5-dimethyl-2-phenyl-(cyclopenta[b]thiophen-6-on) (5,6 mmol) in 5ml THF zu. Man liess man das entstandene Reaktionsgemisch langsam auf Raumtemperatur erwärmen und 10 weitere Stunden bei Raumtemperatur rühren. Die so erhaltene Mischung wurde auf Eiswasser gegossen, die wässrige Phase mit 30 ml Methylenchlorid extrahiert, über Magnesiumsulfat getrocknet und das Lösungsmittel anschliessend entfernt. Man erhielt 1,1 g eines braunen Öls (ein Alkohol). Das Öl wurde mit 0,3 g Jod und 50 ml Benzol und das so erhaltene Gemisch 0,5 Stunden unter Rückfluss zum Sieden erhitzt. Nach Abkühlen auf Raumtemperatur wurde die Mischung mit Natriumcarbonat gewaschen, über Magnesiumsulfat getrocknet und das Lösungsmittel entfernt Das Produkt wurde säulenchromatographisch mit einem Eluat von Toluol/Ethylacetat 1/1 mit Kieselgel als stationäre Phase gereinigt Man erhielt 0,96 g des Liganden (48 % Ausbeute bezogen auf 8-Bromchinolin).
   ¹H-NMR (CDCl₃) des Liganden: 9,03 (m, 1H); 8,26 (m, 1H); 7,98 (m, 1H); 7,81 (m, 1H); 7,65(m, 1H); 7,50-7,30 (m, 6H); 3,48 (s, 2H); 2,50 (s, 3H); 2,17 (s, 3H).
b) Darstellung von 6-(8-Chinolyl)-2,5-dimethyl-3-phenyl-[cyclopenta[b]thiophen]chromdichlorid Zu einer Lösung von 0,73 g (2,1 mmol) 6-(8-Chinolyl)-2,5-dimethyl-3-phenyl-[4-H-cyclopenta[b]-thiophen] in 20 ml Diethylether wurden bei -30°C 1,4 ml einer 1,6 M Lösung von Methyllithium in Diethylether zugegeben. Anschliessend liess man das entstandene Reaktionsgemisch langsam auf Raumtemperatur erwärmen und eine weitere Stunde bei Raumtemperatur rühren. Das Reaktionsgemisch wurde dann auf -70°C abgekühlt und 0,86 g (2,3 mmol) CrCl₃x3THF zugegeben. Man liess man das entstandene Reaktionsgemisch langsam auf Raumtemperatur erwärmen, 6 weitere Stunde bei Raumtemperatur rühren und gab dann 50 ml Methylenchlrid zu. Die Lösung wurde von unlöslichen Bestandteilen abfiltriert und das Lösungsmittel bis auf ein Volumen von 3 ml entfernt. Die so erhaltene konzentrierte Lösung wurde auf -30°C abgekühlt, der entstandene Niederschlag nach einem Tag abfiltriert, mit kaltem Diethylether gewaschen und getrocknet. Es konnten 0,22 g des Chromkomplexes isoliert werden (21%).

### Beispiel 3

Darstellung von 4-(8-Chinolyl)-2,5-dimethyl-1-phenyl-[cyclopenta[b]pyrrol]chromdichlorid 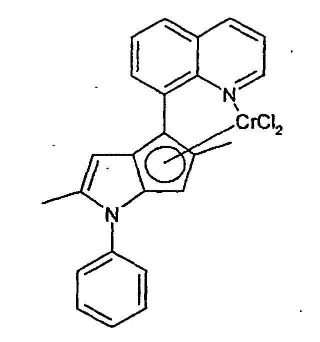
a) Darstellung des Ligandsystems 4-(8-Chinolyl)-2,5-dimethyl-7-H-1-phenyl-[cyclopenta[b]pyrrol] Eine Lösung von 10.4 g 8-Bromchinolin (50 mmol) in 100 ml THF wurde auf -80°C gekühlt und mit 20 ml einer 2,5 M Lösung von n-Butyllithium in Hexan (50 mmol) versetzt Anschliessend liess man das entstandene Reaktionsgemisch weitere 15 Minuten bei -80°C rühren und gab dann eine Lösung von 11,3 g 5,6-Dihydro-2,5-dimethyl-1-phenyl-(cyclopenta[b]pyrrol-4-on) (50 mmol) in 30 ml THF zu. Man liess man das entstandene Reaktionsgemisch langsam auf Raumtemperatur erwärmen und erhitzt anschliessend 3 weitere Stunden unter Rückfluss. Die so erhaltene Mischung wurde auf Raumtemperatur gekühlt und dann mit Eis und dann Salzsäure bis etwa pH 1 versetzt. Die organische Phase wird abgetrennt, die wässrige Phase mit Ammoniaklösung bis etwa pH 9 versetzt, mit Diethylether extrahiert und die vereinten organischen Phasen über Magnesiumsulfat getrocknet und das Lösungsmittel anschliessend entfernt Das so erhaltene Produkt wurde mit Salzsäure bis pH 0 versetzt und die Mischung 2 Stunden unter Rückfluss erhitzt. Neutralisation und Aufarbeitung ergab 10,9 g des Liganden.
b) Darstellung von 4-(8-Chinolyl)-2,5-dimethyl-1-phenyl-[cyclopenta[b]pyrrol]chromdichlorid Zu einer Lösung von 0,13 g (3,1 mmol) Kaliumhydrid in 60 ml THF wurden 1,0 g (3 mmol) 4-(8-Chinolyl)-2,5-dimethyl-7-H-1-phenyl-[cyclopenta[b]pyrrol zugegeben. Anschliessend liess man das entstandene eine weitere Stunde bei Raumtemperatur rühren und dann 1,12 g (3 mmol) CrCl₃x3THF zugegeben. Man liess man das entstandene 15 weitere Stunden bei Raumtemperatur rühren und gab dann 50 ml Methylenchlrid zu. Die Lösung wurde vom Lösungsmittel befreit, der Rückstand in Dichlormethan aufgenommen und die so erhaltene Lösung von unlöslichen Bestandteilen abfiltriert. Nach Entfernen des Lösungsmittels wurden 0,84 g des Chromkomplexes (61%) erhalten.

### Beispiel 4

### a) Trägervorbehandlung

100 g ES 70 X, ein sprühgetrocknetes Kieselgel der Fa. Crosfield wurden 6 h bei 130°C im Vakuumausgeheizt.

### b) Trägerung

35 mg des Komplexes aus Beispiel 1 (82,1 mmol) wurden mit 4,32 ml einer 4,75 M Lösung von MAO in Toluol der Firma Albemarle versetzt und 15 min gerührt. Die entstandene Lösung wurde innerhalb von 10 min zu 2 g des Trägermaterials ES 70 X aus Beispiel 4a) gegeben und 60 min nachgerührt. Danach wurde der Katalysator bei Raumtemperatur bei 10⁻³ mbar getrocknet.

### Beispiel 5

Polymerisation

In einen 1I-Autoklaven, der mit Argon inertisiert worden war, wurden 400 ml Isobutan und 2 ml einer Triisoprenylaluminium-Lösung in Heptan (entsprechend 75 mg Triisoprenylaluminium) gegeben und schließlich 13,8 mg des in Beispiel 4 b) erhaltenen Katalysatorfeststoffs zudosiert. Es wurde 60 min bei 40 bar Ethylendruck und 70°C polymerisiert. Die Polymerisation wurde durch Ablassen des Drucks abgebrochen und das Produkt durch das Bodenventil ausgetragen. Es wurden 72 g Polyethylen erhalten.
Produktivität: 520 g PE/g Katalysatorfeststoff

## Patentansprüche

1. Monocyclopentadienylkomplex, welcher folgendes Strukturmerkmal der allgemeinen Formel (HCp)YₙM enthält, worin die Variablen folgende Bedeutung haben:
HCp ein Cyclopentadienyl-System mit mindestens einem kondensierten Heterocyclus
Y ein an HCp gebundener Substituent, enthaltend mindestens einen neutralen Donor, welcher ein Atom der Gruppen 15 oder 16 des Periodensystems enthält, wobei Y ein Substituent der allgemeinen Formel -Zₘ-A ist, worin die Variablen folgende Bedeutung haben:
Z eine divalente Brücke zwischen A und HCp
A NR⁴R⁵, PR⁴R⁵, OR⁴, SR⁴ oder ein unsubstituiertes, substituiertes oder kondensiertes, heteroaromatisches Ringsystem,
R⁴-R⁵ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR⁶₃, wobei die organischen Reste R⁴-R⁵ auch durch Halogene substituiert sein können und je zwei Reste R⁴-R⁵ auch zu einem fünf- oder sechsgliedrigen Ring verbunden sein können,
R⁶ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei Reste R⁶ auch zu einem fünf- oder sechsgliedrigen Ring verbunden sein können und
m 1 ist, oder wenn A ein unsubstituiertes, substituiertes oder kondensiertes, heterocyclisches Ringsystem ist, auch 0 sein kann,
M ein Metall der Gruppen 3, 4, 5 oder 6 des Periodensystems
n 1, 2 oder 3

2. Monocyclopentadienylkomplex nach Anspruch 1, worin der Donor in Y intramolekular an M gebunden ist.

3. Monocyclopentadienylkompiex nach den Ansprüchen 1 oder 2, der allgemeinen Formel (HCp)YMXₖ, worin die Variablen folgende Bedeutung haben:
HCp ein Cyclopentadienyl-System mit mindestens einem kondensierten Heterocyclus
Y ein an HCp gebundener Substituent, enthaltend mindestens einen neutralen Donor, welcher ein Atom der Gruppen 15 oder 16 des Periodensystems enthält, wobei Y ein Substituent der allgemeinen Formel -Zₘ-A ist, worin die Variablen folgende Bedeutung haben:
Z eine divalente Brücke zwischen A und HCp
A NR⁴R⁵, PR⁴R⁵, OR⁴, SR⁴ oder ein unsubstituiertes, substituiertes oder kondensiertes, heteroaromatisches Ringsystem,
R⁴-R⁵ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR⁶₃, wobei die organischen Reste R⁴-R⁵ auch durch Halogene substituiert sein können und je zwei Reste R⁴-R⁵ auch zu einem fünf- oder sechsgliedrigen Ring verbunden sein können,
R⁶ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei Reste R⁶ auch zu einem fünf- oder sechsgliedrigen Ring verbunden sein können und
m 1 ist, oder wenn A ein unsubstituiertes, substituiertes oder kondensiertes, heterocyclisches Ringsystem ist, auch 0 sein kann.
M ein Metall der Gruppen 3, 4, 5 oder 6 des Periodensystems
X unabhängig voneinander Fluor, Chlor, Brom, Jod, Wasserstoff, C₁-C₁₀-Alkyl, C₂-C₁₀-Alkenyl, C₆-C₂₀-Aryl, Alkylaryl mit 1-10 C-Atomen im Alkylrest und 6-20 C-Atomen im Arylrest, NR¹R², OR¹, SR¹, SO₃R¹, OC(O)R¹, CN, SCN, β-Diketonat, CO, BF₄-, PF₆-, oder sperrige nichtkoordinierende Anionen,
R¹-R² unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR³₃, wobei die organischen Reste R¹-R² auch durch Halogene substituiert sein können und je zwei Reste R¹-R² auch zu einem fünf- oder sechsgliedrigen Ring verbunden sein können,
R³ unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest und je zwei Reste R³ auch zu einem fünf- oder sechsgliedrigen Ring verbunden sein können und
k 1, 2, oder 3 ist

4. Monocyclopentadienylkomplex nach den Ansprüchen 1 bis 3, worin HCp und Y einen Liganden (HCp-Y) der Formel II bilden: 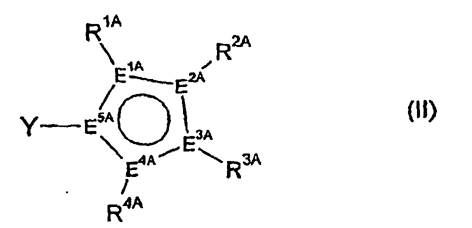 , worin die Variablen folgende Bedeutung haben:
E^{1A}-E^{5A} Kohlenstoff oder maximal ein E^{1A} bis E^{5A} Phosphor oder Stickstoff, bevorzugt Phosphor
R^{1A}-R^{4A} unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest, SiR^{6A}₃, wobei die organischen Reste R^{1A}-R^{4A} auch durch Halogene substituiert sein können und je zwei vicinale Reste R^{1A}-R^{4A} auch zu einem fünf- oder sechsgliedrigen Ring verbunden sein können, mit der Bedingu ng, dass mindestens zwei vicinale Reste R^{1A}-R^{4A} zu einem Heterocyclus verbunden sind, welcher mindestens ein Atom aus den Gruppen 15 oder 16 des Periodensystems enthält.

5. Monocyclopentadienylkomplex nach den Ansprüchen 1 bis 4, worin
m 1,
A NR⁴R⁵, PR⁴R⁵, OR⁴ oder SR⁴ ist und
Z eine divalente Brücke ist, ausgewählt aus der folgenden Gruppe 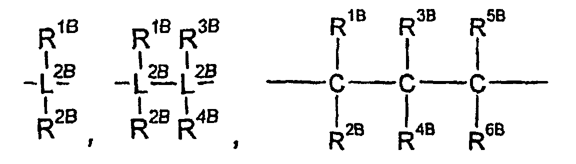 wobei
L^{2B} unahängig voneinander Kohlenstoff oder Silizium bedeutet,
R^{1B}-R^{6B} unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{7B}₃ bedeutet, wobei die organischen Reste R^{1B}-R^{6B} auch durch Halogene substituiert sein können und je zwei geminale oder vicinale Reste R^{1B}-R^{6B} auch zu einem fünf- oder sechsgliedrigen Ring verbunden sein können und
R^{7B} unabhängig voneinander Wasserstoff, C₁-C₂₀-Alkyl, C₂-C₂₀-Alkenyl, C₆-C₂₀-Aryl oder Alkylaryl mit 1 bis 10 C-Atomen im Alkylrest und 6-20 C-Atomen im Arylrest bedeutet und je zwei Reste R^{7B} auch zu einem fünf- oder sechsgliedrigen Ring verbunden sein können.

6. Monocyclopentadienylkomplex nach den Ansprüchen 1 bis 4, worin
A ein unsubstituiertes, substituiertes oder kondensiertes, heteroaromatisches Ring-system und
Z 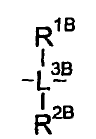 wobei
L^{3B} unahängig voneinander Kohlenstoff oder Silizium bedeutet,
R^{1B}-R^{2B} unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{7B}₃ bedeutet, wobei die organischen Reste R^{1B}-R^{2B} auch durch Halogene substituiert sein können und je zwei Reste R^{1B}-R^{2B} auch zu einem fünf- oder sechsgliedrigen Ring verbunden sein können und
R^{7B} unabhängig voneinander Wasserstoff, C₁-C₂₀-Alkyl, C₂-C₂₀-Alkenyl, C₆-C₂₀-Aryl oder Alkylaryl mit 1 bis 10 C-Atomen im Alkylrest und 6-20 C-Atomen im Arylrest bedeutet und je zwei Reste R^{7B} auch zu einem fünf- oder sechsgliedrigen Ring verbunden sein können.
m 0 oder 1 ist.

7. Monocyclopentadienylkomplex nach den Ansprüchen 1 bis 4 oder 6, worin A 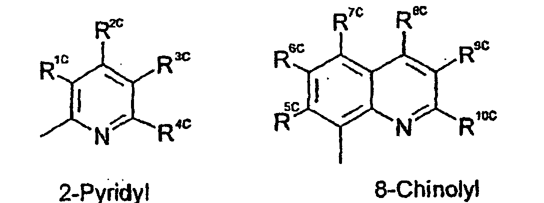 ist, wobei
R^{1C}-R^{10C} unabhängig voneinander Wasserstoff, C₁-C₂₀-Alkyl, C₂-C₂₀-Alkenyl, C₆-C₂₀-Aryl, Alkylaryl mit 1 bis 10 C-Atomen im Alkylrest und 6-20 C-Atomen im Arylrest oder SiR^{11C}₃ bedeutet, wobei die organischen Reste R^{1C}-R^{10C} auch durch Halogene substituiert sein können und je zwei vicinale Reste R^{1C}-R^{10C} auch zu einem fünf- oder sechsgliedrigen Ring verbunden sein können und
R^{11C} unabhängig voneinander Wasserstoff, C₁-C₂₀-Alkyl, C₂-C₂₀-Alkenyl, C₆-C₂₀-Aryl oder Alkylaryl mit 1 bis 10 C-Atomen im Alkylrest und 6-20 C-Atomen im Arylrest bedeutet und je zwei Reste R^{11C} auch zu einem fünf- oder sechsgliedrigen Ring verbunden sein können.

8. Katalysatorsystem zur Olefinpolymerisation, enthaltend
A) mindestens einen Monocyclopentadienylkomplex gemäss den Ansprüchen 1 bis 7,
B) optional einen organischen oder anorganischen Träger,
C) optional eine oder mehrere kationenbildende Verbindung,
D) optional weitere zur Olefinpolymerisation geeignete Katalysatoren und
E) optional eine oder mehrere Metallverbindungen der Gruppe 1, 2 oder 13 des Periodensystems.

9. Vorpolymerisiertes Katalysatorsystem, enthaltend ein Katalysatorsystem nach Anspruch 8 und hinzupolymerisiert ein oder mehrere lineare C₂-C₁₀-1-Alkene im Massenverhältnis von 1:0,1 bis 1:1000 bezogen auf das Katalysatorsystem.

10. Verwendung eines Katalysatorsystems nach den Ansprüchen 8 oder 9 zur Polymerisation oder Copolymerisation von Olefinen.

11. Verfahren zur Herstellung von Polyolefinen durch Polymerisation oder Copolymerisation von Olefinen in Gegenwart eines Katalysatorsystems nach den Ansprüchen 8 oder 9.

## Claims

1. A monocyclopentadienyl complex which comprises the following structural feature of the formula (HCp)YₙM, where the variables have the following meanings:
HCp is a cyclopentadienyl system containing at least one fused heterocycle,
Y is a substituent which is bound to HCp and comprises at least one uncharged donor containing an atom of group 15 or 16 of the Periodic Table and has the formula -Zₘ-A, where the variables have the following meanings:
Z is a divalent bridge between A and HCp,
A is NR⁴R⁵, PR⁴R⁵, OR⁴, SR⁴ or an unsubstituted, substituted or fused, heterocyclic ring system,
R⁴-R⁵ are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, SiR⁶₃, where the organic radicals R⁴ and R⁵ may also be substituted by halogen and two radicals R⁴ and R⁵ may also be joined to form a five- or six-membered ring,
R⁶ are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, and two radicals R⁶ may also be joined to form a five- or six-membered ring, and
m is 1, or may also be 0 when A is an unsubstituted, substituted or fused, heterocyclic ring system,
M is a metal of group 3, 4, 5 or 6 of the Periodic Table, and
n is 1, 2 or 3.

2. A monocyclopentadienyl complex as claimed in claim 1, wherein the donor in Y is bound intramolecularly to M.

3. A monocyclopentadienyl complex as claimed in claim 1 or 2 which has the formula (HCp)YMXₖ, where the variables have the following meanings:
HCp is a cyclopentadienyl system containing at least one fused heterocycle,
Y is a substituent which is bound to HCp and comprises at least one uncharged donor containing an atom of group 15 or 16 of the Periodic Table and has the formula -Zₘ-A, where the variables have the following meanings:
Z is a divalent bridge between A and HCp,
A is NR⁴R⁵, PR⁴R⁵, OR⁴, SR⁴ or an unsubstituted, substituted or fused, heterocyclic ring system,
R⁴-R⁵ are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, SiR⁶₃, where the organic radicals R⁴ and R⁵ may also be substituted by halogen and two radicals R⁴ and R⁵ may also be joined to form a five- or six-membered ring,
R⁶ are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, and two radicals R⁶ may also be joined to form a five- or six-membered ring, and
m is 1, or may also be 0 when A is an unsubstituted, substituted or fused, heterocyclic ring system,
M is a metal of group 3, 4, 5 or 6 of the Periodic Table,
X are each, independently of one another, fluorine, chlorine, bromine, iodine, hydrogen, C₁-C₁₀-alkyl, C₂-C₁₀-alkenyl, C₆-C₂₀-aryl, alkylaryl having 1-10 carbon atoms in the alkyl part and 6-20 carbon atoms in the aryl part, NR¹R², OR¹, SR¹, SO₃R¹, OC(O)R¹, CN, SCN, β-diketonate, CO, BF₄⁻, PF₆⁻ or bulky noncoordinating anions,
R¹-R² are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, SiR³₃, where the organic radicals R¹-R² may also be substituted by halogens and two radicals R¹-R² may also be joined to form a five- or six-membered ring,
R³ are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part and two radicals R³ may also be joined to form a five- or six-membered ring, and
k is 1, 2 or 3.

4. A monocyclopentadienyl complex as claimed in any of claims 1 to 3, wherein HCₚ and Y form a ligand (HCₚ-Y) of the formula II 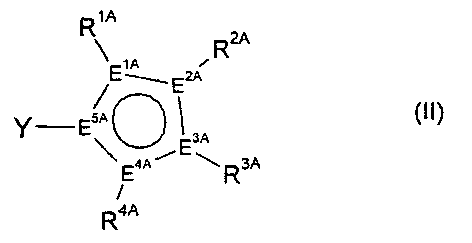 where the variables have the following meanings:
E^{1A}-E^{5A} are each carbon or at most one E^{1A} to E^{5A} is phosphorus or nitrogen, preferably phosphorus,
R^{1A}-R^{4A} are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part, SiR^{6A}₃, where the organic radicals R^{1A}-R^{4A} may also be substituted by halogens and two vicinal radicals R^{1A}-R^{4A} may also be joined to form a five- or six-membered ring, with the proviso that at least two vicinal radicals R^{1A}-R^{4A} are joined to form a heterocycle which contains at least one atom from group 15 or 16 of the Periodic Table.

5. A monocyclopentadienyl complex as claimed in any of claims 1 to 4, wherein
m is 1,
A is NR⁴R⁵, PR⁴R⁵, OR⁴ or SR⁴ and
Z is a divalent bridge selected from the group consisting of 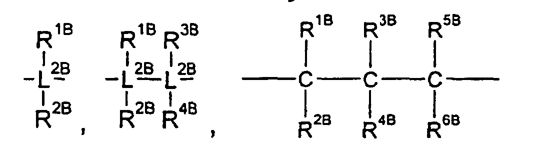 where
L^{2B} are each, independently of one another, carbon or silicon,
R^{1B}-R^{6B} are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part or SiR^{7B}₃, where the organic radicals R^{1B}-R^{6B} may also be substituted by halogens and two geminal or vicinal radicals R^{1B}-R^{6B} may also be joined to form a five- or six-membered ring and
R^{7B} are each, independently of one another, hydrogen, C₁-C₂₀-alkyl, C₂-C₂₀-alkenyl, C₆-C₂₀-aryl or alkylaryl having from 1 to 10 carbon atoms in the alkyl part and 6-20 carbon atoms in the aryl part and two radicals R^{7B} may also be joined to form a five- or six-membered ring.

6. A monocyclopentadienyl complex as claimed in any of claims 1 to 4, wherein
A is an unsubstituted, substituted or fused, heteroaromatic ring system and
Z is 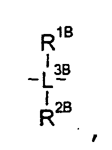 where
L^{3B} are each, independently of one another, carbon or silicon,
R^{1B}-R^{2B} are each, independently of one another, hydrogen, C₁-C₂₀-alkyl, C₂-C₂₀-alkenyl, C₆-C₂₀-aryl, alkylaryl having from 1 to 10 carbon atoms in the alkyl radical and 6-20 carbon atoms in the aryl radical or SiR^{7B}₃, where the organic radicals R^{1B}-R^{2B} may also be substituted by halogens and two radicals R^{1B}-R^{2B} may also be joined to form a five- or six-membered ring and
R^{7B} are each, independently of one another, hydrogen, C₁-C₂₀-alkyl, C₂-C₂₀-alkenyl, C₆-C₂₀-aryl or alkylaryl having from 1 to 10 carbon atoms in the alkyl radical and 6-20 carbon atoms in the aryl radical and two radicals R^{7B} may also be joined to form a five- or six-membered ring, and
m is 0 or 1.

7. A monocyclopentadienyl complex as claimed in any of claims 1 to 4 or 6, wherein A is 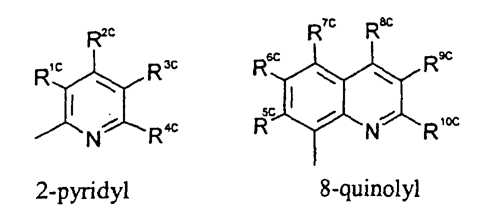 where
R^{1C}-R^{10C} are each, independently of one another, hydrogen, C₁-C₂₀-alkyl, C₂-C₂₀-alkenyl, C₆-C₂₀-aryl, alkylaryl having from 1 to 10 carbon atoms in the alkyl part and 6-20 carbon atoms in the aryl part or SiR^{11C}₃, where the organic radicals R^{1C}-R^{10C} may also be substituted by halogens and two vicinal radicals R^{1C}-R^{10C} may also be joined to form a five- or six-membered ring and
R^{11C} are each, independently of one another, hydrogen, C₁-C₂₀-alkyl, C₂-C₂₀-alkenyl, C₆-C₂₀-aryl or alkylaryl having from 1 to 10 carbon atoms in the alkyl part and 6-20 carbon atoms in the aryl part and two radicals R^{11C} may also be joined to form a five- or six-membered ring.

8. A catalyst system for olefin polymerization, comprising
A) at least one monocyclopentadienyl complex as claimed in any of claims 1 to 7,
B) optionally an organic or inorganic support,
C) optionally one or more cation-forming compounds,
D) optionally one or more catalysts suitable for olefin polymerization and
E) optionally one or more metal compounds of group 1, 2 or 13 of the Periodic Table.

9. A prepolymerized catalyst system comprising a catalyst system as claimed in claim 8 and polymerized onto it one or more linear C₂-C₁₀-1-alkenes in a mass ratio of from 1:0.1 to 1:1000, based on the catalyst system.

10. The use of a catalyst system as claimed in claim 8 or 9 for the polymerization or copolymerization of olefins.

11. A process for preparing polyolefins by polymerization or copolymerization of olefins in the presence of a catalyst system as claimed in claim 8 or 9.

## Revendications

1. Complexe monocyclopentadiènyle, qui comprend la caractéristique de structure suivante de formule générale (HCp)YₙM, dans laquelle les variables ont la signification suivante :
HCp un système cyclopentadiènyle avec au moins un hétérocycle condensé
Y un substituant lié à HCp, contenant au moins un donneur neutre, qui comprend un atome des groupes 15 ou 16 du système périodique des éléments, où Y est un substituant de formule générale -Zₘ-A, dans laquelle les variables ont la signification suivante :
Z un pont divalent entre A et HCp
A NR⁴R⁵, PR⁴R⁵, OR⁴, SR⁴ ou un système cyclique hétéroaromatique, non substitué, substitué ou condensé,
R⁴-R⁵ indépendamment l'un de l'autre, hydrogène, alkyle en C₁-C₂₀, alcényle en C₂-C₂₀, aryle en C₈-C₂₀, alkylaryle avec 1 à 10 atomes de C dans le radical alkyle et 6 à 20 atomes de C dans le radical aryle, SiR⁶₃, où les radicaux organiques R⁴-R⁵ peuvent aussi être substitués par des halogènes et les deux radicaux R⁴-R⁵ peuvent aussi être liés chacun à un cycle de cinq ou six membres,
R⁶ indépendamment les uns des autres, hydrogène, alkyle en C₁-C₂₀, alcényle en C₂-C₂₀, aryle en C₈-C₂₀,, alkylaryle avec 1 à 10 atomes de C dans le radical alkyle et 6 à 20 atomes de C dans le radical aryle et les deux radicaux R⁶ peuvent aussi être liés chacun à un cycle de cinq ou six membres, et
m est 1, ou quand E est un système cyclique hétérocyclique, non substitué, substitué ou condensé, il peut être aussi 0,
M un métal des groupes 3, 4, 5 ou 6 du système périodique des éléments,
n 1, 2 ou 3.

2. Complexe monocyclopentadiènyle selon la revendication 1, dans lequel le donneur dans Y est lié de manière intramoléculaire à M.

3. Complexe monocyclopentadiènyle selon les revendications 1 ou 2, de formule générale (HCp)YMXₖ, dans laquelle les variables ont la signification suivante :
HCp un système cyclopentadiènyle avec au moins un hétérocycle condensé
Y un substituant lié à HCp, contenant au moins un donneur neutre, qui comprend un atome des groupes 15 ou 16 du système périodique des éléments, où Y est un substituant de formule générale -Zₘ-A, dans laquelle les variables ont la signification suivante :
Z un pont divalent entre A et HCp
A NR⁴R⁵, PR⁴R⁵, OR⁴, SR⁴ ou un système cyclique hétéroaromatique, non substitué, substitué ou condensé,
R⁴-R⁵ indépendamment l'un de l'autre, hydrogène, alkyle en C₁-C₂₀, alcényle en C₂-C₂₀, aryle en C₈-C₂₀, alkylaryle avec 1 à 10 atomes de C dans le radical alkyle et 6 à 20 atomes de C dans le radical aryle, SiR⁶₃, où les radicaux organiques R⁴-R⁵ peuvent aussi être substitués par des halogènes et les deux radicaux R⁴-R⁵ peuvent aussi être liés chacun à un cycle de cinq ou six membres,
R⁶ indépendamment les uns des autres, hydrogène, alkyle en C₁-C₂₀, alcényle en C₂-C₂₀, aryle en C₈-C₂₀,, alkylaryle avec 1 à 10 atomes de C dans le radical alkyle et 6 à 20 atomes de C dans le radical aryle et les deux radicaux R⁶ peuvent aussi être liés chacun à un cycle de cinq ou six membres, et
m est 1, ou quand E est un système cyclique hétérocyclique, non substitué, substitué ou condensé, il peut être aussi 0,
M un métal des groupes 3, 4, 5 ou 6 du système périodique des éléments,
X indépendamment les uns des autres, fluor, chlore, brome, iode, hydrogène, alkyle en C₁-C₂₀, alcényle en C₂-C₂₀, aryle en C₆-C₂₀,, alkylaryle avec 1 à 10 atomes de C dans le radical alkyle et 6 à 20 atomes de C dans le radical aryle, NR¹R², OR¹, SR¹, SO₃R¹, OC(O)R¹, CN, SCN, β-dicétonate, CO, BF₄₋, PF₆₋, ou des anions non coordonnants encombrants,
R¹-R² indépendamment l'un de l'autre, hydrogène, alkyle en C₁-C₂₀, alcényle en C₂-C₂₀, aryle en C₈-C₂₀, alkylaryle avec 1 à 10 atomes de C dans le radical alkyle et 6 à 20 atomes de C dans le radical aryle, SiR³₃, où les radicaux organiques R¹-R² peuvent aussi être substitués par des halogènes et les deux radicaux R¹-R² peuvent aussi être liés chacun à un cycle de cinq ou six membres,
R³ indépendamment les uns des autres, hydrogène, alkyle en C₁-C₂₀, alcényle en C₂-C₂₀, aryle en C₆-C₂₀,, alkylaryle avec 1 à 10 atomes de C dans le radical alkyle et 6 à 20 atomes de C dans le radical aryle et les deux radicaux R³ peuvent aussi être liés chacun à un cycle de cinq ou six membres, et
k est 1, 2 ou 3.

4. Complexe monocyclopentadiènyle selon les revendications 1 à 3, dans lequel HCp et Y forment un ligand (HCp-Y) de formule II : 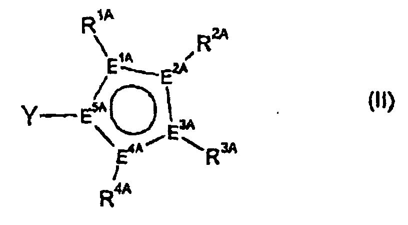 dans laquelle les variables ont la signification suivante :
E^{1A}-E^{5A} hydrocarbure ou au maximum un de E^{1A} à E^{5A} phosphore ou azote, de préférence phosphore
R^{1A}-R^{4A} indépendamment les uns des autres, hydrogène, alkyle en C₁-C₂₀, alcényle en C₂-C₂₀, aryle en C₆-C₂₀, alkylaryle avec 1 à 10 atomes de C dans le radical alkyle et 6 à 20 atomes de C dans le radical aryle, SiR^{6A}₃, où les radicaux organiques R^{1A}-R^{4A} peuvent aussi être substitués par des halogènes et deux radicaux voisins R^{1A}-R^{4A} peuvent aussi être liés chacun à un cycle de cinq ou six membres, à la condition qu'au moins deux radicaux voisins R^{1A}-R^{4A} sont liés à un hétérocycle, qui comprend au moins un atome des groupes 15 ou 16 du système périodique des éléments.

5. Complexe monocyclopentadiènyle selon les revendications 1 à 4, où
m représente 1,
A représente NR⁴R⁵, PR⁴R⁵, OR⁴ ou SR⁴ et
Z représente un pont divalent, choisi dans le groupe suivant : 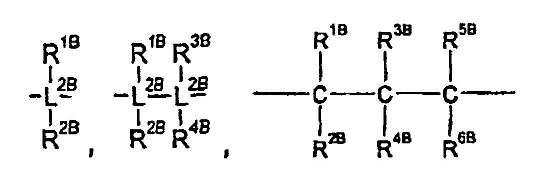 dans lequel :
L^{2B} représente, indépendamment les uns des autres, hydrocarbure ou silicium,
R^{1B}-R^{6B} représente, indépendamment les uns des autres, alkyle en C₁-C₂₀, alcényle en C₂-C₂₀, aryle en C₆-C₂₀, alkylaryle avec 1 à 10 atomes de C dans le radical alkyle et 6 à 20 atomes de C dans le radical aryle, SiR^{7B}₃, où les radicaux organiques R^{1B}-R^{6B} peuvent aussi être substitués par des halogènes et deux radicaux jumelés ou voisins R^{1B}-R^{6B} peuvent aussi être liés chacun à un cycle de cinq ou six membres, et
R^{7B} indépendamment les uns des autres, hydrogène, alkyle en C₁-C₂₀, alcényle en C₂-C₂₀, aryle en C₆-C₂₀,, alkylaryle avec 1 à 10 atomes de C dans le radical alkyle et 6 à 20 atomes de C dans le radical aryle et les deux radicaux R^{7B} peuvent aussi être liés chacun à un cycle de cinq ou six membres.

6. Complexe monocyclopentadiènyle selon les revendications 1 à 4, où
A représente un système cyclique hétéroaromatique, non substitué, substitué ou condensé, et
Z représente : 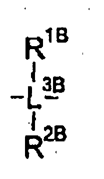 dans lequel :
L^{3B} représente, indépendamment les uns des autres, hydrocarbure ou silicium,
R^{1B}-R^{2B} représente, indépendamment les uns des autres, alkyle en C₁-C₂₀, alcényle en C₂-C₂₀, aryle en C₆-C₂₀, alkylaryle avec 1 à 10 atomes de C dans le radical alkyle et 6 à 20 atomes de C dans le radical aryle, SiR^{7B}₃, où les radicaux organiques R^{1B}-R^{2B} peuvent aussi être substitués par des halogènes et deux radicaux R^{1B}-R^{2B} peuvent aussi être liés chacun à un cycle de cinq ou six membres, et
R^{7B} indépendamment les uns des autres, hydrogène, alkyle en C₁-C₂₀, alcényle en C₂-C₂₀, aryle en C₆-C₂₀,, alkylaryle avec 1 à 10 atomes de C dans le radical alkyle et 6 à 20 atomes de C dans le radical aryle et les deux radicaux R^{7B} peuvent aussi être liés chacun à un cycle de cinq ou six membres,
m est 0 ou 1.

7. Complexe monocyclopentadiènyle selon les revendications 1 à 4 ou 6, où A est : 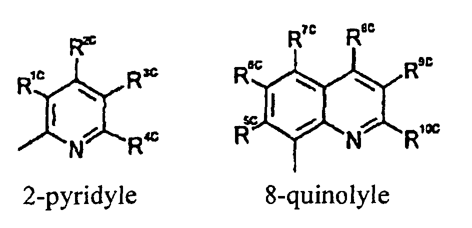 dans lequel,
R^{1C}-R^{10C} représente, indépendamment les uns des autres, alkyle en C₁-C₂₀, alcényle en C₂-C₂₀, aryle en C₆-C₂₀, alkylaryle avec 1 à 10 atomes de C dans le radical alkyle et 6 à 20 atomes de C dans le radical aryle, SiR^{11C}₃, où les radicaux organiques R^{1C}-R^{10C} peuvent aussi être substitués par des halogènes et deux radicaux voisins R^{1C}-R^{10C} peuvent aussi être liés chacun à un cycle de cinq ou six membres, et
R^{11C} indépendamment les uns des autres, hydrogène, alkyle en C₁-C₂₀, alcényle en C₂-C₂₀, aryle en C₆-C₂₀,, alkylaryle avec 1 à 10 atomes de C dans le radical alkyle et 6 à 20 atomes de C dans le radical aryle et les deux radicaux R^{11C} peuvent aussi être liés chacun à un cycle de cinq ou six membres.

8. Système catalytique pour la polymérisation des oléfines, comprenant :
A) au moins un complexe monocyclopentadiènyle selon les revendications 1 à 7,
B) éventuellement, un support organique ou inorganique,
C) éventuellement, un ou plusieurs composés formant des cations,
D) éventuellement, d'autres catalyseurs appropriés à la polymérisation des oléfines, et
E) éventuellement, un ou plusieurs composés métalliques du groupe 1, 2 ou 13 du système périodique des éléments.

9. Système catalytique prépolymérisé, comprenant un système catalytique selon la revendication 8 et, polymérisé(s) par addition, un ou plusieurs 1-alcènes en C₂-C₁₀ linéaires en un rapport en poids de 1/0,1 à 1/1000, sur la base du système catalytique.

10. Utilisation d'un système catalytique selon les revendications 8 ou 9 pour la polymérisation ou copolymérisation des oléfines.

11. Procédé de fabrication de polyoléfines par polymérisation ou copolymérisation des oléfines en présence d'un système catalytique selon les revendications 8 ou 9.
